(19) Europäisches Patentamt
European Patent Office
Office européen des brevets

(11) **EP 4 550 737 A1**

(12) **EUROPEAN PATENT APPLICATION**
published in accordance with Art. 153(4) EPC

(43) Date of publication:
**07.05.2025 Bulletin 2025/19**

(21) Application number: **22948631.1**

(22) Date of filing: **30.06.2022**

(51) International Patent Classification (IPC):
*H04L 27/00* *(2006.01)*

(52) Cooperative Patent Classification (CPC):
**H04L 27/00**

(86) International application number:
**PCT/CN2022/103165**

(87) International publication number:
**WO 2024/000529 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **CHANNEL STATE INFORMATION FEEDBACK METHOD AND APPARATUS**

(57) Disclosed in the embodiments of the present application are a channel state information (CSI) feedback method and apparatus. The method comprises: a terminal device determining, according to the length of a time domain (TD) base vector or a Doppler domain (DD) base vector and a codebook parameter, which is configured for a network-side device, codebook indication information corresponding to a data transmission layer; and the terminal device sending, to the network-side device, CSI including the codebook indication information, wherein the codebook indication information is used for instructing the network-side device to determine precoding matrices corresponding to different moments. By means of implementing the embodiments of the present application, it is possible to determine the length of a TD base vector or a DD base vector, so as to determine the TD base vector or the DD base vector, which is used in a codebook, by using the length, such that the TD base vector or the DD base vector is introduced on the basis of a Rel-16 or Rel-17 Type II codebook, and thus, not only can pre-coding corresponding to different moments be determined, but redundant configuration of a codebook parameter or redundant reporting of the codebook parameter can also be avoided, thereby reducing signaling overhead.

determining codebook indication information corresponding to a data transmission layer based on a length of a time domain (TD) basis vector or a length of a Doppler domain (DD) basis vector, and a codebook parameter configured by a network-side device — 201

sending CSI including the codebook indication information to the network-side device, in which the codebook indication information indicates the network-side device to determine precoding matrixes corresponding to different time instances — 202

FIG. 2

## Description

## TECHNICAL FIELD

The disclosure relates to a field of communication technologies, and particularly to a method and an apparatus for feeding back channel state information (CSI).

## BACKGROUND

For a terminal moving with a medium-high velocity, due to a rapid change of a channel in a time domain (TD), channel state information (CSI) is still fed back based on a conventional Type II codebook, such that the CSI fed back does not match current channel information, causing a decline in the system performance. Therefore, it is a problem to be solved how to enable the CSI fed back by the terminal in a medium-high velocity mobile scene to match the current channel information.

## SUMMARY

Embodiments of the disclosure provide a method and an apparatus for feeding back channel state information (CSI). A length of a time domain (TD) basis vector or a length of a Doppler domain (DD) basis vector may be determined, and then the TD basis vector or the DD basis vector employed in the codebook is determined based on the length. In this way, by introducing the TD basis vector or the DD basis vector on the basis of the Rel-16 or 17 Type II codebook, not only may preset codes corresponding to different time instances be determined, but also a redundant configuration of a codebook parameter or a redundant reporting of a codebook parameter may be avoided, thus reducing a signaling overhead.

In a first aspect, an embodiment of the disclosure provides a method for feeding back CSI. The method is performed by a terminal. The method includes: determining codebook indication information corresponding to a data transmission layer based on a length of a TD basis vector or a length of a DD basis vector, and a codebook parameter configured by a network-side device; and sending CSI including the codebook indication information to the network-side device, in which the codebook indication information indicates the network-side device to determine precoding matrixes corresponding to different time instances.

In the technical solution, the length of the TD basis vector or the length of the DD basis vector may be determined, and then the TD basis vector or the DD basis vector employed in the codebook may be determine by employing the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may a preset code corresponding to different time instances be determined, but also a redundant configuration of the codebook parameter or a redundant reporting of the codebook parameter may be avoided, thus reducing a signaling configuration overhead or a reporting feedback overhead.

In an implementation, determining the codebook indication information corresponding to the data transmission layer based on the length of the TD basis vector or the length of the DD basis vector, and the codebook parameter configured by the network-side device, includes: determining the length of the TD basis vector or the length of the DD basis vector; and determining the codebook indication information corresponding to the data transmission layer based on the length and the codebook parameter configured by the network-side device.

In an implementation, determining the length of the TD basis vector or the length of the DD basis vector includes: determining the length of the TD basis vector or the length of the DD basis vector based on a first parameter configured by the network-side device.

In a possible implementation, the first parameter is a number of channel state information reference signal (CSI-RS) resources or a number of CSI-RS resources within a CSI-RS measurement window, and determining the length of the TD basis vector or the length of the DD basis vector based on the first parameter configured by the network-side device includes: determining that the length of the TD basis vector or the length of the DD basis vector is equal to the number of CSI-RS resources or the number of CSI-RS resources within the CSI-RS measurement window configured by the network-side device; determining that the length of the TD basis vector or the length of the DD basis vector is equal to $Q_1$ times of the number of CSI-RS resources configured by the network-side device; determining that the length of the TD basis vector or the length of the DD basis vector is equal to $Q_1$ times of the number of CSI-RS resources within the CSI-RS measurement window configured by the network-side device; or determining that the length of the TD basis vector or the length of the DD basis vector is equal to $\frac{N_{CSI-RS}}{C_u} Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

In a possible implementation, the first parameter is a size of a CSI-RS measurement window and an interval between time instances of adjacent CSI measurements, and determining the length of the TD basis vector or the length of the DD basis vector based on the first parameter configured by the network-side device includes: determining that the length of the TD basis vector or the length of the DD basis vector is equal to

$$\frac{(W_{meas}-1)}{d} + 1$$

where $W_{meas}$ represents the size of the CSI-RS measurement window, and d represents the interval between the time instances of the adjacent CSI measurements, a maximum interval or a minimum interval between adjacent CSI measurements, or an average of intervals of multiple adjacent CSI measurements.

In a possible implementation, the first parameter is a number of CSI measurements or a number of CSI measurements within a CSI-RS measurement window, and determining the length of the TD basis vector or the length of the DD basis vector based on the first parameter configured by the network-side device includes: determining that the length of the TD basis vector or the length of the DD basis vector is equal to the number of CSI-RS measurements or the number of CSI-RS measurements within the CSI-RS measurement window configured by the network-side device; determining that the length of the TD basis vector or the length of the DD basis vector is equal to $Q_2$ times of the number of CSI measurements configured by the network-side device; determining that the length of the TD basis vector or the length of the DD basis vector is equal to $Q_2$ times of the number of CSI measurements within the CSI-RS measurement window configured by the network-side device; or determining that the length of the TD basis vector or the length of the DD basis vector is equal to

$$\frac{B}{C_u}Q_2$$

where $Q_2$ is a positive integer, B represents the number of CSI measurements or the number of CSI measurements within the CSI-RS measurement window configured by the network-side device, and $C_u$ represents a compression unit in a TD.

In a possible implementation, the first parameter is a parameter W, and determining the length of the TD basis vector or the length of the DD basis vector based on the first parameter configured by the network-side device includes: determining that the length of the TD basis vector or the length of the DD basis vector is

equal to $\dfrac{W}{C_u}$, where $W \bmod C_u = 0$, and $C_u$ represents a compression unit in a TD; or determining that the length of the TD basis vector or the length of the DD basis vector is

equal to $\left\lceil \dfrac{W}{C_u} \right\rceil$ or $\left\lfloor \dfrac{W}{C_u} \right\rfloor$, where $W \bmod C_u \neq 0$, $\lceil \rceil$ represents ceiling, and $\lfloor \rfloor$ represents flooring, in which the parameter W is determined by at least one of following parameters 1) to 4): 1) a time slot corresponding to a CSI reporting time instance; 2) a time slot where a CSI reference resource is located; 3) a time slot corresponding to a left boundary or a right boundary of a CSI-RS measurement window; or 4) a time slot corresponding to a left boundary or a right boundary of a CSI reporting window.

In a possible implementation, the method further includes: determining the compression unit $C_u$ in the TD.

In a possible implementation, the compression unit $C_u$ is $\alpha T_c$, where $\alpha$ is an integer less than or equal to 1, and $T_c$ represents a channel coherence time; the compression unit $C_u$ is a measurement period of the CSI-RS resource; the compression unit $C_u$ is $\beta d_1$, where $\beta$ is an integer greater than or equal to 1, and $d_1$ represents the interval between the adjacent CSI measurements; or the compression unit $C_u$ is $\beta d_2$, where $\beta$ is an integer greater than or equal to 1, and $d_2$ represents the maximum interval or the minimum interval between the adjacent CSI measurements , or the average of the intervals of the multiple adjacent CSI measurements.

In an implementation, determining the length of the TD basis vector or the length of the DD basis vector includes: determining the length of the TD basis vector or the length of the DD basis vector based on Doppler offset information and a Doppler extension estimated based on a CSI-RS by the terminal.

In an implementation, determining the length of the TD basis vector or the length of the DD basis vector includes: receiving the length of the TD basis vector or the length of the DD basis vector configured by the network-side device.

In an implementation, the codebook indication information at least includes one or more combinations of: a matrix combined by at least one spatial domain (SD) basis vector, a combination coefficient matrix, a matrix combined by at least one frequency domain (FD) basis vector, or a matrix combined by at least one TD basis vector or at least one DD basis vector.

In a second aspect, another embodiment of the disclosure provides a method for feeding back CSI. The method is performed by a network-side device. The method includes: determining a length of a TD basis vector or a length of a DD basis vector; configuring a codebook parameter for a terminal; sending the length of the TD basis vector or the length of the DD basis vector and the codebook parameter to the terminal; receiving codebook indication information corresponding to a data transmission layer determined by the length and the codebook parameter of the terminal; and determining precoding matrixes corresponding to different time instances based on the codebook indication information.

In the technical solution, the length of the TD basis vector or the length of the DD basis vector may be determined, and then the TD basis vector or the DD basis vector employed in the codebook is determined by employing the length. In this way, introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may preset codes corresponding to different time instances be determined, but also a redundant configuration of the codebook parameter or a redundant reporting of the codebook parameter may be avoided, thus reducing a signaling configuration overhead or a reporting feedback overhead.

In an implementation, determining the length of the TD basis vector in the TD or the length of the DD basis vector in the DD includes: determining the length of the TD basis vector or the length of the DD basis vector based on a first parameter configured by the network-side device.

In a possible implementation, the first parameter is a number of CSI-RS resources or a number of CSI-RS resources within a CSI-RS measurement window, and determining the length of the TD basis vector or the length of the DD basis vector based on the first parameter configured by the network-side device includes: determining that the length of the TD basis vector or the length of the DD basis vector is equal to the number of CSI-RS resources or the number of CSI-RS resources within the CSI-RS measurement window configured by the network-side device; determining that the length of the TD basis vector or the length of the DD basis vector is equal to $Q_1$ times of the number of CSI-RS resources configured by the network-side device; determining that the length of the TD basis vector or the length of the DD basis vector is equal to $Q_1$ times of the number of CSI-RS resources within the CSI-RS measurement window configured by the network-side device; or determining that the length of the TD basis vector or the length of the DD basis vector is equal to $\dfrac{N_{CSI-RS}}{C_u} Q_1$ , where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

In a possible implementation, the first parameter is a size of a CSI-RS measurement window and an interval between time instances of adjacent CSI measurements, and determining the length of the TD basis vector or the length of the DD basis vector based on the first parameter configured by the network-side device includes: determining that the length of the TD basis vector or the length of the DD basis vector is equal to $\dfrac{(W_{meas}-1)}{d} + 1$ , where $W_{meas}$ represents the size of the CSI-RS measurement window, and $d$ represents the interval between the time instances of the adjacent CSI measurements, a maximum interval or a minimum interval between adjacent CSI measurements, or an average of intervals of multiple adjacent CSI measurements.

In a possible implementation, the first parameter is a number of CSI measurements or a number of CSI measurements within a CSI-RS measurement window, and determining the length of the TD basis vector or the length of the DD basis vector based on the first parameter configured by the network-side device includes: determining that the length of the TD basis vector or the length of the DD basis vector is equal to the number of CSI measurements or the number of CSI measurements within the CSI-RS measurement window configured by the network-side device; determining that the length of the TD basis vector or the length of the DD basis vector is equal to $Q_2$ times of the number of CSI measurements configured by the network-side device; determining that the length of the TD basis vector or the length of the DD basis vector is equal to $Q_2$ times of the number of CSI measurements within the CSI-RS measurement window configured by the network-side device; or determining that the length of the TD basis vector or the length of the DD basis vector is equal to $\dfrac{B}{C_u} Q_2$ , where $Q_2$ is a positive integer, B represents the number of CSI measurements or the number of CSI measurements within the CSI-RS measurement window configured by the network-side device, and $C_u$ represents a compression unit in a TD.

In a possible implementation, the first parameter is a parameter W, and determining the length of the TD basis vector or the length of the DD basis vector based on the first parameter configured by the network-side device includes: determining that the length of the TD basis vector or the length of the DD basis vector is equal to $\dfrac{W}{C_u}$ , where $W \bmod C_u = 0$, and $C_u$ represents a compression unit in a TD; or determining that the length of the TD basis vector or the length of the DD basis vector is equal to $\left\lceil \dfrac{W}{C_u} \right\rceil$ or $\left\lfloor \dfrac{W}{C_u} \right\rfloor$ , where $W \bmod C_u \neq 0$, $\lceil \rceil$ represents ceiling, and $\lfloor \rfloor$ represents flooring, in which the parameter W is determined by at least one of following parameters 1) to 4): 1) a time slot corresponding to a CSI reporting time instance; 2) a time slot where a CSI reference resource is located; 3) a time slot corresponding to a left boundary or a right boundary of a CSI-RS measurement window; or 4) a time slot corresponding to a left boundary or a right boundary of a CSI reporting window.

In a possible implementation, the method further includes: determining the compression unit $C_u$ in the TD.

In a possible implementation, the compression unit $C_u$ is $\alpha T_c$, where $\alpha$ is an integer less than or equal to 1, and $T_c$ represents a channel coherence time; the compression unit $C_u$ is a measurement period of the CSI-RS resource; the compression unit $C_u$ is $\beta d_1$, where $\beta$ is an integer greater than or equal to 1, and $d_1$ represents the interval between the adjacent CSI measurements; or the compression unit $C_u$ is $\beta d_2$, where $\beta$ is an integer greater than or equal to 1, and $d_2$ represents the maximum interval or the minimum interval between the adjacent CSI measurements, or the average of the intervals of the multiple adjacent CSI measurements.

In an implementation, determining the length of the TD basis vector or the length of the DD basis vector includes: determining the length of the TD basis vector or the length of the DD basis vector based on Doppler offset information and a Doppler extension reported by the terminal.

In an implementation, determining precoding matrixes corresponding to different time instances based on the codebook indication information includes: determining precoding matrixes corresponding to different time instances by employing a codebook structure or a precoding matrix indicator (PMI) prediction algorithm based on the codebook indication information and a way of determining the length of the TD basis vector or the length of the DD basis vector.

In a third aspect, another embodiment of the disclosure provides a communication device, having some or all of functions of the terminal according to the method in the first aspect. For example, the communication device has the function to realize some or all of embodiments of the disclosure, or has the function to realize any one of embodiments of the disclosure. The function may be realized by hardware, or be realized by hardware executing corresponding software. The hardware or software includes one or more units or modules corresponding to the above function.

In an implementation, the structure of the communication device may include a receiving and sending module and a processing module. The processing module is configured to support the communication device to perform corresponding functions in the above method. The receiving and sending module is configured to support a communication between the communication device and other devices. The communication device may also include a storage module. The storage module is configured to couple with a receiving and sending module and a processing module, and stores a computer program and data necessary for the communication device.

For example, the processing module may be a processor, the receiving and sending module may be a transceiver or a communication interface, and the storage module may be a memory.

In a fourth aspect, another embodiment of the disclosure provides a communication device, having some or all of functions of the network-side device according to method embodiments in the second aspect. For example, the communication device has the function to realize some or all of the embodiments of the disclosure, or has the function to realize any one of the embodiments of the disclosure. The function may be realized by hardware, or be realized by hardware executing corresponding software. The hardware or software includes one or more units or modules corresponding to the above function.

In an implementation, the structure of the communication device may include a receiving and sending module and a processing module. The processing module is configured to support the communication device to perform corresponding functions in the above method.

The receiving and sending module is configured to support a communication between the communication device and other devices. The communication device may also include a storage module. The storage module is configured to couple with a receiving and sending module and a processing module, and stores a computer program and data necessary for the communication device.

For example, the processing module may be a processor, the receiving and sending module may be a transceiver or a communication interface, and the storage module may be a memory.

In a fifth aspect, an embodiment of the disclosure provides a communication device including a processor. When a computer program stored in a memory is called by the processor, the method in the first aspect is implemented.

In a sixth aspect, an embodiment of the disclosure provides a communication device including a processor. When a computer program stored in a memory is called by the processor, the method in the second aspect is implemented.

In a seventh aspect, an embodiment of the disclosure provides a communication device including a processor and a memory. The memory is configured to store a computer program. When the computer program stored in the memory is executed by the processor, the communication device is caused to perform the method in the first aspect.

In an eighth aspect, an embodiment of the disclosure provides a communication device including a processor and a memory. The memory is configured to store a computer program. When the computer program stored in the memory is executed by the processor, the communication device is caused to perform the method in the second aspect.

In a ninth aspect, an embodiment of the disclosure provides a communication device, including a processor and an interface circuit. The interface circuit is configured to receive and transmit code instructions to the processor. The processor is configured to run the code instructions to cause the communication device to perform the method in the first aspect.

In a tenth aspect, an embodiment of the disclosure provides a communication device, including a processor and an interface circuit. The interface circuit is configured to receive and transmit code instructions to the processor. The processor is configured to run the code instructions to cause the communication device to perform the method in the second aspect.

In an eleventh aspect, an embodiment of the disclosure provides a system for feeding back CSI. The system includes the communication device in the third aspect and the communication device in the fourth aspect, or the system includes the communication device in the fifth aspect and the communication device in the sixth aspect, or the system includes the communication device in the seventh aspect and the communication device in the eighth aspect, or the system includes the communication device in the ninth aspect and the communication device in the tenth aspect.

In a twelfth aspect, an embodiment of the disclosure provides a computer readable storage medium for storing instructions used by the terminal. When instructions are executed, the terminal is caused to perform the method in the first aspect.

In a thirteenth aspect, an embodiment of the disclosure provides a readable storage medium for storing instructions used by the network-side device. When instructions are executed, the network-side device is caused to perform the method in the second aspect.

In a fourteenth aspect, the disclosure provides a computer program product including a computer program. When the computer program is run in a computer, the computer is caused to perform the method in the first aspect.

In a fifteenth aspect, the disclosure provides a computer program product including a computer program. When the computer program is run in a computer, the computer is caused to perform the method in the second aspect.

In a sixteenth aspect, the disclosure provides a chip system, including at least one processor and at least one interface for supporting the terminal to perform the functions in the first aspect, for example, to determine or process at least one of the data and information in the above method. In a possible design, the chip system also includes a memory for saving a computer program and data necessary for the terminal. The chip system may include a chip, or include a chip and other discrete devices.

In a seventeenth aspect, the disclosure provides a chip system, including at least one processor and at least one interface for supporting the network-side device to perform the functions in the second aspect, for example, to determine or process at least one of the data and information in the above method. In a possible design, the chip system also includes a memory for saving a computer program and data necessary for the network-side device. The chip system may include a chip, or include a chip and other discrete devices.

In an eighteenth aspect, the disclosure provides a computer program. When the computer program is run in a computer, the computer is caused to perform the method in the first aspect.

In a nineteenth aspect, the disclosure provides a computer program. When the computer program is run in a computer, the computer is caused to perform the method in the second aspect.

## BRIEF DESCRIPTION OF THE DRAWINGS

In order to clearly illustrate a technical solution in embodiments of the disclosure or the background, description is made below to accompanying drawings used in the embodiments of the disclosure and the background.

FIG. 1 is a schematic diagram illustrating a communication system according to an embodiment of the disclosure.

FIG. 2 is a flow chart illustrating a method for feeding back channel state information (CSI) according to an embodiment of the disclosure.

FIG. 3 is a flow chart illustrating a method for feeding back channel state information (CSI) according to another embodiment of the disclosure.

FIG. 4 is a flow chart illustrating a method for feeding back channel state information (CSI) according to a yet another embodiment of the disclosure.

FIG. 5 is a flow chart illustrating a method for feeding back channel state information (CSI) according to a yet another embodiment of the disclosure.

FIG. 6 is a schematic diagram illustrating a relationship between a channel state information (CSI) measurement and a CSI reporting in a time domain (TD) according to an embodiment of the disclosure.

FIG. 7 is a block diagram illustrating a communication device according to an embodiment of the disclosure.

FIG. 8 is a block diagram illustrating a communication device according to another embodiment of the disclosure.

FIG. 9 is a block diagram illustrating a chip according to an embodiment of the disclosure.

## DETAILED DESCRIPTION

Reference is made in detail below to exemplary embodiments. Examples of embodiments are illustrated in the accompanying drawings, in which, the same or similar numbers represent the same or similar elements or elements with the same or similar functions. Embodiments described below with reference to the accompanying drawings are exemplary, which are intended to explain the disclosure and do not be understood a limitation of the disclosure. In the description of the disclosure, unless otherwise represented, "or" represents "or", for example, "A or B" represents A or B, such as "a TD basis vector or a DD basis vector" herein represents the TD basis vector or the DD basis vector; "and/or" in the disclosure represents an association relationship that describes associated objects, indicating three cases, for example "A and/or B" represents, A alone, A and B simultaneously, and B alone.

For a terminal moving in a medium-high velocity, due to a rapid change of a channel in a time domain (TD), channel state information (CSI) is still fed back based on a traditional Type II codebook, such that the CSI fed back does not match current channel information, causing a decline in the system performance. In order to solve this problem, researches show that introducing the TD basis vector or the DD basis vector based on a Rel-16 or 17 Type II codebook may realize a precoding prediction at a future time instance, such that a predicted preset code matches a channel at a future time instance. A codebook structure corresponding to an enhanced CSI fed back based on the Rel-16 or 17 Type II codebook may be represented as

$$\left(W_f^* \otimes W_1\right) W_2 W_t^{\mathrm{H}}$$

or $W_1 \bar{W}_2 W_f \otimes W_d)^H$, where $W_1$ in such two codebook structures represents a matrix combined by multiple spatial domain (SD) basis vectors or a unit matrix combined by at least one unit vector, $W_2$ represents a combination coefficient matrix, $W_f$ represents a matrix combined by multiple frequency domain (FD) basis vectors, $W_d$ represents a matrix combined by multiple Doppler domain (DD) basis vectors, and $W_t$ represents a matrix combined by multiple TD basis vectors. In order to determine the TD basis vector or the DD basis vector used in the codebook, a length $N_4$ of the TD basis vector or a length $N_4$ of the DD basis vector need to be determined first. Presently, there is no way to determine the length $N_4$.

It should be noted that, in case that the TD basis vector or the DD basis vector is introduced to enhancement design of the Rel-16 or 17 Type II codebook in a medium-high velocity mobile scene, the length $N_4$ of the TD basis vector or the length $N_4$ of the DD basis vector needs to be determined first to calculate preset codes corresponding to different time instances. Therefore, embodiments of the disclosure provide a method and an apparatus for feeding back CSI. The length of the TD basis vector or the length of the DD basis vector may be determined, and the TD basis vector or the DD basis vector employed in the codebook is determined by employing the length. In this way, by introducing the TD basis vector or the DD basis vector on the basis of the Rel-16 or 17 Type II codebook, not only may the preset codes corresponding to different time instances be determined, but also a redundant configuration of a codebook parameter or a redundant report of a codebook parameter is avoided, thus reducing a signaling overhead.

In order to better understand a method for feeding back CSI in embodiments of the disclosure, first, description is made below to a communication system to which embodiments of the disclosure are applicable.

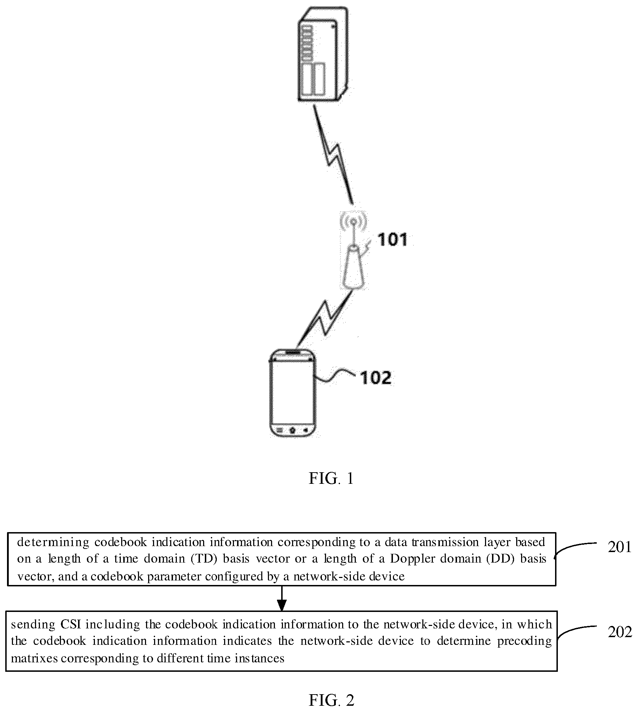

Referring to FIG. 1, FIG. 1 is a schematic diagram illustrating a communication system according to an embodiment of the disclosure. The communication system may include, but is not limited to, a network-side device and a terminal. The number and shape of devices illustrated in FIG. 1 are exemplary and do not constitute a limitation of embodiments of the disclosure. In a practical application, the communication system may include two or more network-side devices and two or more terminals. For example, the communication system illustrated in FIG. 1 includes a network-side device 101 and a terminal 102.

It should be noted that a technical solution of embodiments of the disclosure may be applied to various communication systems, such as, a long term evolution (LTE) system, a 5th generation (5G) mobile communication system, a 5G new radio (NR) system, or other new mobile communication systems in the future.

The network-side device 101 in embodiments of the disclosure is an entity in the network side for transmitting or receiving signals. For example, the network-side device 101 may be an evolved NodeB (eNB), a transmission reception point (TRP), or a next generation NodeB (gNB) in an NR system, a base station in other mobile communication systems in the future, or an access node in a wireless fidelity (WiFi) system. A detailed technology and a detailed device form employed by the network-side device are not limited in embodiments of the disclosure. The network-side device in embodiments of the disclosure may be combined by a central unit (CU) and a distributed unit (DU), in which CU may also be called a control unit. A protocol layer of the network device, such as the base station, may be separated by employing a CU-DU structure, in which, part of functions of the protocol layer are centrally controlled by the CU, while part or all of remaining functions of the protocol layer are distributed in the DU. The DU is controlled by the CU.

The terminal 102 in embodiments of the disclosure is an entity in a user side for receiving or transmitting signals, such as a mobile phone. The terminal may also be called a terminal, a user equipment (UE), a mobile station (MS), a mobile terminal (MT), etc. The terminal may be a car with a communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in smart home, and so on. In addition, in embodiments of the disclosure, the terminal 102 may also include devices, such as relays, that are capable of performing data communication with the network-side device 101 (such as, a base station). A detailed technology and a detailed device form employed by the terminal are not limited in embodiments of the disclosure.

It may be understood that, the communication system in embodiments of the disclosure is intended to clearly describe the technical solution of embodiments of the disclosure, and does not constitute a limitation of the technical solution in embodiments of the disclosure. Those skilled in the art may know that, with the evolution of the system architecture and the emergence of a new service scene, the technical solution in embodiments of the disclosure is equally applicable to similar technical problems.

Description is made in detail below to the method and the apparatus for feeding back CSI in the disclosure in combination with accompanying drawings.

Referring to FIG. 2, FIG. 2 is a flowchart illustrating a method for feeding back CSI according to an embodiment of the disclosure. It should be noted that, the method for feeding back the CSI in embodiments of the disclosure may be performed by a terminal, that is, the method for feeding back the CSI in embodiments of the disclosure is described from a terminal side. As illustrated in FIG. 2, the method may include, but is not limited to, the following. At block 201, codebook indication information corresponding to a data transmission layer is determined based on a length of a TD basis vector or a length of a DD basis vector, and a codebook parameter configured by a network-side device.

Alternatively, the length of the TD basis vector or the length of the DD basis vector may be determined. In an implementation, the length may be determined by the terminal based on relevant information, or the length may also be configured by the network-side device. For example, the terminal may implicitly determine the length of the TD basis vector or the length of the DD basis vector based on a relevant parameter configured by the network-side device. Or, the terminal may determine the length of the TD basis vector or the length of the DD basis vector based on information, such as estimated Doppler offset information and an estimated Doppler extension. Or, the terminal may also receive the length of the TD basis vector or the length of the DD basis vector configured by the network-side device.

In an implementation, the terminal may receive a codebook parameter sent by the network-side device (such as a base station). The codebook parameter is configured by the network-side device, and used to indicate a maximum support parameter for a terminal to feed back the CSI information.

In a possible implementation, the terminal may receive the codebook parameter configured by the network-side device (such as the base station), and determine the codebook indication information corresponding to the data transmission layer based on the codebook parameter and the length of the TD basis vector. In embodiments of the disclosure, the codebook indication information may at least include, but not limited to, one or more combinations of a matrix combined by at least one SD basis vector, a combination coefficient matrix, a matrix combined by at least one FD basis vector, or a matrix combined by at least one TD basis vector. The length of the TD basis vector is configured to determine the TD basis vector employed in a codebook, and the TD basis vector is introduced on the basis of the Rel-16 or 17 Type II codebook. The term "at least one" may be understood as one or more, and the term "more" means at least two, such as two, three, etc., unless otherwise specified.

In a possible implementation, the terminal may receive the codebook parameter configured by the network-side device (such as the base station) and determine the codebook indication information corresponding to the data transmission layer based on the codebook parameter and the length of the DD basis vector. In embodiments of the disclosure, the codebook indication information may at least include, but not limited to, one or more combinations of the matrix combined by the at least one SD basis vector, the combination coefficient matrix, the matrix combined by the at least one FD basis vector, or a matrix combined by at least one DD basis vector. The length of the DD basis vector is used to determine the DD basis vector employed in the codebook, and the DD basis vector is introduced on the basis of the Rel-16 or 17 Type II codebook.

At block 202, CSI including the codebook indication information is sent to the network-side device, in which the codebook indication information indicates the network-side device to determine precoding matrixes corresponding to different time instances.

Alternatively, in case that the terminal determines the codebook indication information corresponding to the data transmission layer, the terminal may send the CSI including the codebook indication information to the network-side device. The network-side device may determine the precoding matrixes corresponding to different time instances based on the codebook indication information in the CSI when receiving the CSI sent by the terminal.

In an implementation, for example, the codebook indication information may include a matrix combined by multiple SD basis vectors, the combination coefficient matrix, a matrix combined by multiple FD basis vectors, and a matrix combined by multiple TD basis vectors. After the CSI including the codebook indication information is received, the network-side device may, based on the codebook indication information, calculate the precoding matrixes corresponding to different time instances by employing a codebook structure

$$\left( W_f^* \otimes W_1 \right) W_2 W_t^{\mathrm{H}}$$

, or predict the precoding matrixes corresponding to different time instances by employing a precoding matrix indicator (PMI) prediction algorithm, where $W_1$ represents the matrix combined by the multiple SD basis vectors or a unit matrix combined by at least one unit vector, $\boldsymbol{W_2}$ represents the combination coefficient matrix, $W_f$ represents the matrix combined by the multiple FD basis vectors, and $W_t$ represents the matrix combined by the multiple TD basis vectors.

In an implementation, for example, the codebook indication information may include the matrix combined by the multiple SD basis vectors, the combination coefficient matrix, the matrix combined by the multiple FD basis vectors, and a matrix combined by multiple DD basis vectors. After the CSI including the codebook indication information is received, the network-side device may, based on the codebook indication information, calculate the precoding matrixes corresponding to different time instances by employing a codebook structure $\boldsymbol{W_1}\bar{\boldsymbol{W}}_2$ $(\boldsymbol{W_f} \otimes \boldsymbol{W_d})^H$, or predict the precoding matrixes corresponding to different time instances by employing the PMI prediction algorithm, where $\boldsymbol{W_1}$ represents the matrix combined by the multiple SD basis vectors or the unit matrix combined by the at least one unit vector, $\boldsymbol{W_2}$ represents the combination coefficient matrix, $\boldsymbol{W_f}$ represents the matrix combined by the multiple FD basis vectors, and $\mathbf{W_d}$ represents the matrix combined by the multiple DD basis vectors.

By implementing embodiments of the disclosure, the length of the TD basis vector or the length of the DD basis vector may be determined, such that the TD basis vector or the DD basis vector employed in the codebook is determined based on the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel corresponding to a future time instance. Not only may the preset codes corresponding to different time instances be determined but also a redundant configuration of the codebook parameter or a redundant report of the codebook parameters may be avoided, thus reducing a signaling configuration overhead or a report feedback overhead.

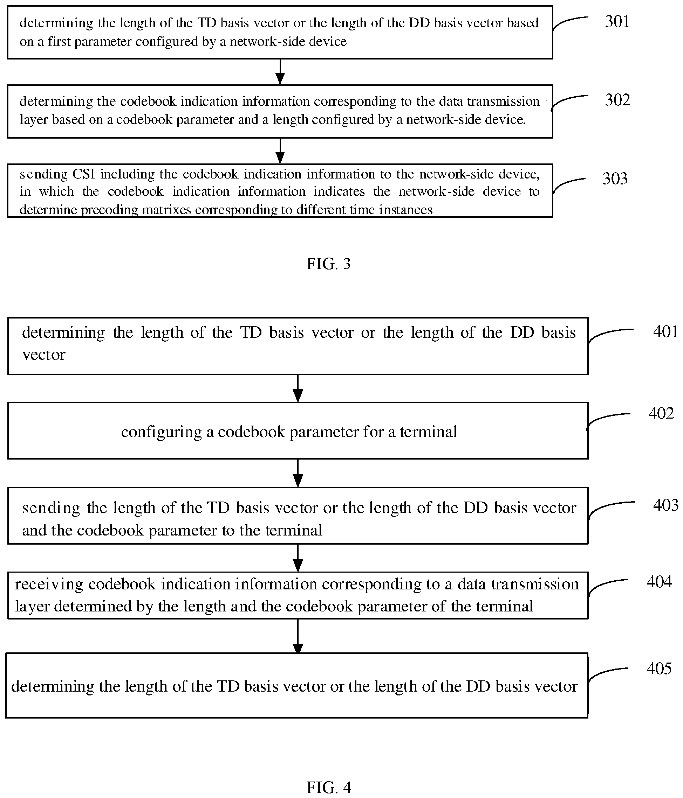

It should be noted that, the terminal may implicitly determine the length of the TD basis vector or the length of the DD basis vector based on the relevant parameter configured by the network-side device. In some embodiments of the disclosure, as illustrated in FIG. 3, the method for feeding back CSI may include, but is not limited to, the following. At block 301, the length of the TD basis vector or the length of the DD basis vector is determined based on a first parameter configured by a network-side device.

Alternatively, the terminal may implicitly determine the length of the TD basis vector or the length of the DD basis vector based on the first parameter configured by the network-side device. In some embodiments of the disclosure, the first parameter may include, but is not limited to, at least one of: a number of CSI-RS resources, a number of CSI-RS resources within a CSI-RS measurement window, a size of a CSI-RS measurement window, an interval between time instances of adjacent CSI measurements, a number of CSI measurements, a number of CSI measurements within a CSI-RS measurement window, or a parameter W. It should be noted that, the CSI-RS measurement window configured by the network-side device is to facilitate performing one or more channel measurements for the CSI-RS resources within a certain time range, and there may be a possibility that the CSI-RS measurement window is not configured by the network-side device.

In an implementation, for example, the first parameter is the number of CSI-RS resources or the number of CSI-RS resources within the CSI-RS measurement window, the length of the TD basis vector or the length of the DD basis vector may be determined based on the number of CSI-RS resources or the number of CSI-RS resources within the CSI-RS measurement window.

In a possible implementation, it may be determined that the length of the TD basis vector or the length of the DD basis vector is equal to the number of CSI-RS resources or the number of CSI-RS resources within the CSI-RS measurement window configured by the network-side device. For example, the number $N_{CSI-RS}$ of CSI-RS resources configured by the network-side device is 4. Then it may be determined that the length $N_4$ of the TD basis vector or the length $N_4$ of the DD basis vector is 4. For another example, the number $N_{CSI-RS}$ of the CSI-RS resources within the CSI-RS measurement window configured by the network-side device is 6. Then it may be determined that the length $N_4$ of the TD basis vector or the length $N_4$ of the DD basis vector is 6.

In a possible implementation, it may be determined that the length of the TD basis vector or the length of the DD basis vector is equal to $Q_1$ times of the number of CSI-RS resources configured by the network-side device, where $Q_1$ is a positive integer. For example, $Q_1$ is 1 and the number $N_{CSI-RS}$ of CSI-RS resources configured by the network-side device is 4. Then it may be determined that the length $N_4$ of the TD basis vector or the length $N_4$ of the DD basis vector is 4.

In a possible implementation, it may be determined that the length of the TD basis vector or the length of the DD basis vector is equal to $Q_1$ times of the number of CSI-RS resources within the CSI-RS measurement window configured by the network-side device, where $Q_1$ is a positive integer. For example, $Q_1$ is 1 and the number $N_{CSI-RS}$ of CSI-RS resources within the CSI-RS measurement window configured by the network-side device is 6, and then it may be determined that the length $N_4$ of the TD basis vector or the length $N_4$ of the DD basis vector is 6.

In a possible implementation, it may be determined that the length of the TD basis vector or the length of the DD basis vector is equal to $\dfrac{N_{CSI-RS}}{C_u}Q_1$ , where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD. For example, the $Q_1$ is 1, the number $N_{CSI-RS}$ of CSI-RS resources configured by the network-side device is 4, and the $C_u$ is 2ms. Then it may be determined that the length $N_4$ of the TD basis vector or

the length $N_4$ of the DD basis vector is $\dfrac{4}{2} \times 1 = 2$ , that is, the length $N_4$ of the TD basis vector or the length $N_4$ of the DD basis vector is 2.

It should be noted that, in embodiments of the disclosure, when the number $N_{CSI-RS}$ of CSI-RS resources is greater than 1, the $N_{CSI-RS}$ CSI-RS resources may be in the same time domain type or different time domain types. The time domain type may be periodic, semi-persistent, and non-periodic types. In addition, in embodiments of the disclosure, when the number $N_{CSI-RS}$ of CSI-RS resources is greater than 1, the $N_{CSI-RS}$ CSI-RS resources may also be CSI-RS resources with different functions. For example, a CSI-RS resource is configured as a CSI-RS resource for channel acquisition, and the remaining CSI-RS resources are configured as CSI-RS resources for time-frequency tracking.

In some embodiments of the disclosure, for example, the first parameter is the size of the CSI-RS measurement window and the interval between the time instances of the adjacent CSI measurements. Then the length of the TD basis vector or the length of the DD basis vector may be determined based on the size of the CSI-RS measurement window and the interval between the time instances of the adjacent CSI measurements configured by the network-side device.

In a possible implementation, it may be determined that the length of the TD basis vector or the length of the DD basis vector is equal to $\dfrac{(W_{meas} - 1)}{d} + 1$, where $W_{meas}$ represents the size of the CSI-RS measurement window, and $d$ represents the interval between the time instances of the adjacent CSI measurements, or $d$ represents a maximum interval or a minimum interval between adjacent CSI measurements, or $d$ represents an average of intervals of multiple adjacent CSI measurements.

In some embodiments of the disclosure, for example, the first parameter is the number of CSI measurements or the number of CSI measurements within the CSI-RS measurement window. Then the length of the TD basis vector or the length of the DD basis vector may be determined based on the number of CSI measurements or the number of CSI measurements within the CSI-RS measurement window configured by the network-side device.

In a possible implementation, it may be determined that the length of the TD basis vector or the length of the DD basis vector is equal to the number of CSI measurements or the number of CSI measurements within the CSI-RS measurement window configured by the network-side device. For example, the number B of CSI measurements configured by the network-side device is 2. Then the length $N_4$ of the TD basis vector or the length $N_4$ of the DD basis vector is 2. For another example, the number B of CSI measurements within the CSI-RS measurement window configured by the network-side device is 2. Then the length $N_4$ of the TD basis vector or the length $N_4$ of the DD basis vector is 2.

In a possible implementation, it may be determined that the length of the TD basis vector or the length of the DD basis vector is equal to $Q_2$ times of the number of CSI measurements configured by the network-side device, where $Q_2$ is a positive integer.

In a possible implementation, it may be determined that the length of the TD basis vector or the length of the DD basis vector is equal to $Q_2$ times of the number of CSI measurements within the CSI-RS measurement window configured by the network-side device, where $Q_2$ is a positive integer.

In a possible implementation, it may be determined that the length of the TD basis vector or the length of the DD basis vector is equal to $\dfrac{B}{C_u} Q_2$, where $Q_2$ is a positive integer, $B$ represents the number of CSI measurements or the number of CSI measurements within the CSI-RS measurement window configured by the network-side device, and $C_u$ represents a compression unit in the TD. For example, the $Q_2$ is 1, the number B of CSI measurements or the number B of CSI measurements within the CSI-RS measurement window configured by the network-side device is 4, and the $C_u$ is 2ms. Then the length $N_4$ of the TD basis vector or the length $N_4$ of the DD basis vector is $\dfrac{4}{2} \times 1 = 2$, that is, the length $N_4$ of the TD basis vector or the length $N_4$ of the DD basis vector is 2.

In some embodiments of the disclosure, for example, the first parameter is the parameter W. Then the length of the TD basis vector or the length of the DD basis vector may be determined based on the parameter W configured by the network-side device.

In a possible implementation, it may be determined that the length of the TD basis vector or the length of the DD basis vector is equal to $\dfrac{W}{C_u}$, where W mod $C_u$ =0, $C_u$ represents the compression unit in the TD, and mod represents a modulo function. For example, a value of the parameter W is 4 and $C_u = 2ms$. Then the length $N_4$ of the TD basis vector or the length $N_4$ of the DD basis vector is 2.

In a possible implementation, it may be determined that the length of the TD basis vector or the length of the DD basis vector is equal to $\left\lceil \dfrac{W}{C_u} \right\rceil$ or $\left\lfloor \dfrac{W}{C_u} \right\rfloor$, where W mod $C_u \neq 0$, $\lceil \ \rceil$ represents ceiling, and $\lfloor \ \rfloor$ represents flooring. For example, the value of the parameter W is 5 and $C_u = 2ms$. Then the length $N_4$ of the TD basis vector or the length $N_4$ of the DD basis vector is $\left\lceil \dfrac{5}{2} \right\rceil = 3$, or the length $N_4$ of the TD basis vector or the length $N_4$ of the DD basis vector is $\left\lfloor \dfrac{5}{2} \right\rfloor = 2$. In some embodiments of the disclosure, the parameter W is determined by at least one of following parameters 1) to 4):

1) a time slot corresponding to a CSI reporting time instance;
2) a time slot where a CSI reference resource is located;

3) a time slot corresponding to a left boundary or a right boundary of a CSI-RS measurement window; or
4) a time slot corresponding to a left boundary or a right boundary of a CSI reporting window. It should be noted that, the CSI reporting window is configured by the network-side device, and the CSI reporting window configured aims to facilitate a description that the CSI is reported once within a certain time range, and there may be a possibility that the CSI reporting window is not configured.

For example, the parameter $W$ represents the length $W_{CSI}$ of the CSI reporting window, that is, $W=W_{CSI}$. Or, the parameter $W$ represents the length $W_{meas}$ of the CSI measurement window, that is, $W=W_{meas}$. Or, the parameter W represents a time length between a time slot corresponding to a time instance when a first CSI-RS resource is received for a CSI measurement and a time slot corresponding to a time instance when the right boundary of the CSI reporting window is located, and a unit of the length of the time is one time slot. Or, the parameter $W$ represents a time length between the time slot corresponding to the right boundary or the left boundary of the CSI-RS measurement window and a time slot corresponding to a time instance when the right boundary of the CSI reporting window is located. Or, the parameter $W$ represents a time length between the time slot corresponding to the CSI reference resource and a time slot corresponding to a time instance when the right boundary of the CSI reporting window is located.

It should be noted that, in embodiments of the disclosure, values of $N_{CSI-RS}$, B, $d$, $Q_1$, $Q_2$, $W_{meas}$, and $W_{meas}$ mentioned above may be reported by the terminal, configured by the network-side device, or pre-defined by the terminal and the network-side device.

In some embodiments of the disclosure, the terminal also needs to determine the compression unit $C_u$ of the TD. The compression unit $C_u$ may be determined in any of the following ways.

In a possible implementation, the compression unit $C_u$ may be $\alpha T_c$, where $\alpha$ is an integer less than or equal to 1, and $T_c$ represents a channel coherence time.

$$T_c = \frac{1}{f_d}$$

The coherence time, where $f_d$ represents a Doppler extension of the channel.

In a possible implementation, the compression unit $C_u$ may be a measurement period of the CSI-RS resource.

In a possible implementation, the compression unit $C_u$ may be $\beta d_1$, where $\beta$ is an integer greater than or equal to 1, and $d_1$ represents the interval between the adjacent CSI measurements. For example, for multiple uniform CSI measurements, $d_1$ may represent the interval between the adjacent CSI measurements, and values of $d_1$ and $\beta$ may be employed to determine the compression unit $C_u$.

In a possible implementation, the compression unit $C_u$ may be $\beta d_2$, where $\beta$ is an integer greater than or equal to 1, and $d_2$ represents a maximum interval or a minimum interval between adjacent CSI measurements, or $d_2$ may also represent an average of intervals of multiple adjacent CSI measurements. For example, for non-uniform multiple CSI measurements, $d_2$ may represent a maximum interval or a minimum interval between the adjacent CSI measurements, and values of $d_2$ and $\beta$ may be employed to determine the compression unit $C_u$.

It should be noted that, in embodiments of the disclosure, the values of $\alpha$ and $\beta$ above may be reported by the terminal, or configured by the network-side device, or predefined by the terminal and the network-side device.

At block 302, codebook indication information corresponding to a data transmission layer is determined based on a codebook parameter and a length configured by a network-side device. Actions at block 302 may be respectively realized by employing any one of embodiments of the disclosure, which is not limited in embodiments of the disclosure and is not described in detail.

At block 303, CSI including the codebook indication information is sent to the network-side device, in which the codebook indication information indicates the network-side device to determine precoding matrixes corresponding to different time instances. Action at block 302 may be respectively realized by employing any one of embodiments of the disclosure, which is not limited in embodiments of the disclosure and is not described in detail.

By implementing embodiments of the disclosure, the length of the TD basis vector or the length of the DD basis vector may be implicitly determined based on the relevant parameter configured by the network-side device, so as to determine the TD basis vector or the DD basis vector used in the codebook based on the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may preset codes corresponding to different time instances be determined, but also a redundant configuration of a codebook parameter or a redundant reporting of a codebook parameter may be avoided, thus reducing a signaling configuration overhead or a reporting feedback overhead.

It should be noted that, in some embodiments of the disclosure, the terminal may determine the length of the TD basis vector or the length of the DD basis vector based on estimated Doppler offset information and an estimated Doppler extension. For example, the terminal receives CSI-RS resources configured by the network-side device and performs CSI measurement processing by employing the CSI-RS resources to obtain the estimated Doppler offset information and the estimated Doppler extension. The terminal may determine the length of the TD basis vector or the length of the DD basis vector based on the estimated Doppler offset information and the estimated Doppler extension, thus determining the TD basis vector or the DD basis vector employed in the codebook by employing the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may preset codes corresponding to different time instances be determined, but may also a redundant configuration of the codebook parameter or a redundant reporting of the codebook parameter may be avoided, thus reducing a signaling configuration overhead or a reporting feedback overhead.

In some embodiments of the disclosure, the terminal may receive the length of the TD basis vector or the length of the DD basis vector configured by the network-side device. That is, the length of the TD basis vector or the length of the DD basis vector may be configured for the terminal by the network-side device. The network-side device may implicitly determine the length of the TD basis vector or the length of the DD basis vector based on the relevant parameter (such as the first parameter mentioned above) configured by the network-side device, or the network-side device may determine the length of the TD basis vector or the length of the DD basis vector based on the Doppler offset information and the Doppler extension reported by the terminal. The network-side device may send the length of the TD basis vector or the length of the DD basis vector to the terminal when determining the length of the TD basis vector or the length of the DD basis vector of the terminal, such that the terminal may determine the TD basis vector or the DD basis vector employed in the codebook by employing the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may preset codes corresponding to different time instances are determined, but may also a redundant configuration of the codebook parameter or a redundant reporting of the codebook parameters may be avoided, thus reducing a signaling configuration overhead or a reporting feedback overhead.

It may be understood that, the above embodiments are implementations of the method for feeding back the CSI of embodiments of the disclosure described from the terminal side. Embodiments of the disclosure also provide another method for feeding back CSI, and description is made below to implementations of the method for feeding back CSI from a network-side device. Referring to FIG. 4, FIG. 4 is a flow chart illustrating a method for feeding back CSI according to a yet another embodiment of the disclosure. It should be noted that, the method for feeding back the CSI of embodiments of the disclosure may be performed by the network-side device. As illustrated in FIG. 4, the method for feeding back the CSI may include but is not limited to the following.

At block 401, a length of a TD basis vector or a length of a DD basis vector is determined.

Alternatively, the network-side device may implicitly determine the length of the TD basis vector or the length of the DD basis vector based on a relevant parameter configured by the network-side device. Or, the network-side device may determine the length of the TD basis vector or the length of the DD basis vector based on information such as Doppler offset information and a Doppler extension reported by the terminal. For example, the terminal receives CSI-RS resources configured by the network-side device and performs CSI measurement processing by employing the CSI-RS resources to estimate the Doppler offset information and the Doppler extension. The terminal may report estimated Doppler offset information and a estimated Doppler extension to the network-side device, such that the network-side device may determine the length of the TD basis vector or the length of the DD basis vector based on the estimated Doppler offset information and the estimated Doppler extension.

At block 402, a codebook parameter is configured for a terminal.

At block 403, the length of the TD basis vector or the length of the DD basis vector and the codebook parameter are sent to the terminal.

In an implementation, the network-side device sends the length of the TD basis vector or the length of the DD basis vector and the codebook parameter to the terminal, such that the terminal determines codebook indication information corresponding to a data transmission layer based on the length of the TD basis vector or the length of the DD basis vector and the codebook parameter.

In a possible implementation, the terminal may receive the codebook parameter and the length of the TD basis vector configured by the network-side device (such as a base station), and determine the codebook indication information corresponding to the data transmission layer based on the codebook parameter and the length of the TD basis vector. In embodiments of the disclosure, the codebook indication information may at least include one or more combinations of: a matrix combined by at least one SD basis vector, a combination coefficient matrix, a matrix combined by at least one FD basis vector, or a matrix combined by at least one TD basis vector. The length of the TD basis vector is used to determine the TD basis vector employed in a codebook, and the TD basis vector is introduced on the basis of a Rel-16 or 17 Type II codebook.

In a possible implementation, the terminal may receive the codebook parameter and the length of the DD basis vector configured by the network-side device (such as the base station), and determine the codebook indication information corresponding to the data transmission layer based on the codebook parameter and the length of the DD basis vector. In embodiments of the disclosure, the codebook indication information may at least include, but not be limited to, one or more combinations of the matrix combined by the at least one SD basis vector, the combination coefficient matrix, the matrix combined by the at least one FD basis vector, or a matrix combined by at least one DD basis vector. The length of the DD basis vector is used to determine the DD basis vector employed in the codebook, and the DD basis vector is introduced on the basis of the Rel-16 or 17 Type II codebook.

At step 404, codebook indication information corresponding to a data transmission layer determined by the terminal based on the length and the codebook parameter is received.

Alternatively, after the terminal determines the codebook indication information corresponding to the data transmission layer based on the length of the TD basis vector or the length of the DD basis vector and the codebook parameter, the terminal sends the codebook indication information to the network-side device, such that the network-side device may receive the codebook indication information sent by the terminal.

At block 405, precoding matrixes corresponding to different time instances are determined based on the codebook indication information.

Alternatively, a codebook structure formula may be employed to calculate the precoding matrixes corresponding to different time instances based on the codebook indication information, or a PMI prediction algorithm may be employed to predict the precoding matrixes corresponding to different time instances.

In an implementation, for example, the codebook indication information may include a matrix combined by multiple SD basis vectors, the combination coefficient matrix, a matrix combined by multiple FD basis vectors, and a matrix combined by multiple TD basis vectors. After the CSI including the codebook indication information is received, the network-side device may, based on the codebook indication information, calculate the precoding matrixes corresponding to different time instances by employing a codebook structure

$$\left(W_f^* \otimes W_1\right) W_2 W_t^{\mathrm{H}}$$

, or predict the precoding matrixes corresponding to different time instances by employing the PMI prediction algorithm, where $W_1$ represents the matrix combined by the multiple SD basis vectors or a unit matrix combined by at least one unit vector, $W_2$ represents the combination coefficient matrix, $W_f$ represents the matrix combined by the multiple FD basis vectors, and $W_t$ represents the matrix combined by multiple TD basis vectors.

In an implementation, for example, the codebook indication information may include the matrix combined by the multiple SD basis vectors, the combination coefficient matrix, the matrix combined by the multiple FD basis vectors, and a matrix combined by multiple DD basis vectors. After the CSI including the codebook indication information is received, the network-side device may, based on the codebook indication information, calculate the precoding matrixes corresponding to different time instances by employing a codebook structure $W_1 \tilde{W}_2 (W_f \otimes W_d)^H$, or predict the precoding matrixes corresponding to different time instances by employing the PMI prediction algorithm, where $W_1$ represents the matrix combined by the multiple SD basis vectors or the unit matrix combined by the at least one unit vector, $W_2$ represents the combination coefficient matrix, $W_f$ represents the matrix combined by the multiple FD basis vectors, and $W_d$ represents the matrix combined by the multiple DD basis vectors.

By implementing embodiments of the present disclosure, the length of the TD basis vector or the length of the DD basis vector may be determined, such that the TD basis vector or the DD basis vector employed in the codebook may be determined based on the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may preset codes corresponding to different time instances be determined, but also a redundant configuration of a codebook parameter or a redundant reporting of a codebook parameter may be avoided, thus reducing a signaling configuration overhead or a reporting feedback overhead.

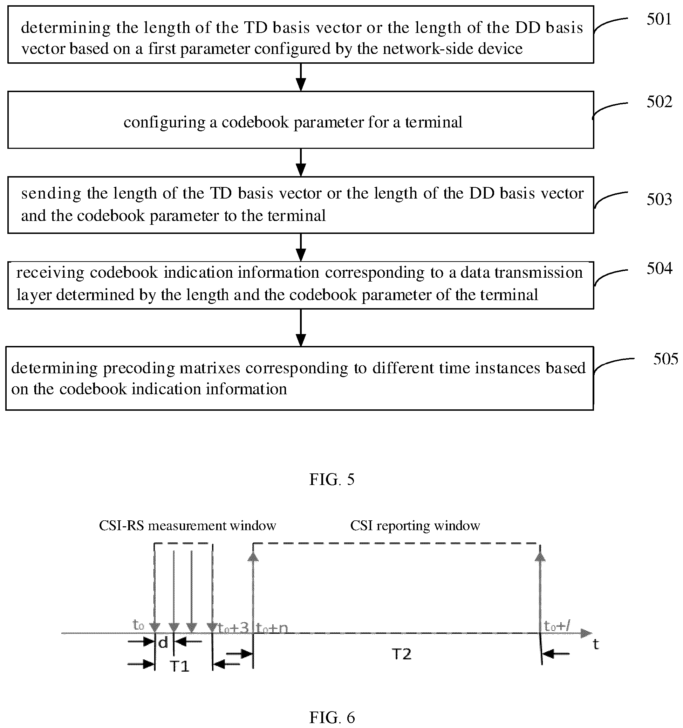

It should be noted that the network-side device may implicitly determine the length of the TD basis vector or the length of the DD basis vector based on the relevant parameter configured by the network-side device. In some embodiments of the disclosure, as illustrated in FIG. 5, the method for feeding back the CSI may include, but is not limited to, the following.

At block 501, a length of the TD basis vector or a length of the DD basis vector is determined based on a first parameter configured by the network-side device.

Alternatively, a terminal may implicitly determine the length of the TD basis vector or the length of the DD basis vector based on the first parameter configured by the network-side device. In some embodiments of the disclosure, the first parameter may include, but is not limited to, at least one of a number of CSI-RS resources, a number of CSI-RS resources within a CSI-RS measurement window, a size of a CSI-RS measurement window, an interval between time instances of adjacent CSI measurements, a number of CSI measurements, a number of CSI measurements within a CSI-RS measurement window, or a parameter W. It should be noted that the CSI-RS measurement window configured by the network-side device is to facilitate description that one or more channel measurements is performed for the CSI-RS resources within a certain time, and there may be a possibility that the CSI-RS measurement window is not configured by the network-side device.

In an implementation, for example, the first parameter is the number of CSI-RS resources or the number of CSI-RS resources within the CSI-RS measurement window, the length of the TD basis vector or the length of the DD basis vector may be determined based on the number of CSI-RS resources or the number of CSI-RS resources within the CSI-RS measurement window.

In a possible implementation, it may be determined that the length of the TD basis vector or the length of the DD basis vector is equal to the number of CSI-RS resources or the number of CSI-RS resources within the CSI-RS measurement window configured by the network-side device. For example, the number $N_{CSI-RS}$ of CSI-RS resources configured by the network-side device is 4. Then it may be determined that the length $N_4$ of the TD basis vector or the length $N_4$ of the DD basis vector is 4. For another example, the number $N_{CSI-RS}$ of the CSI-RS resources within the CSI-RS measurement window configured by the network-side device is 6. Then it may be determined that the length $N_4$ of the TD basis vector or the length $N_4$ of the DD basis vector is 6.

In a possible implementation, it may be determined that the length of the TD basis vector or the length of the DD basis vector is equal to $Q_1$ times of the number of CSI-RS resources configured by the network-side device, where $Q_1$ is a positive integer. For example, $Q_1$ is 1, and the number $N_{CSI-RS}$ of CSI-RS resources configured by the network-side device is 4. Then it may be determined that the length $N_4$ of the TD basis vector or the length $N_4$ of the DD basis vector is 4.

In a possible implementation, it may be determined that the length of the TD basis vector or the length of the DD basis vector is equal to $Q_1$ times of the number of CSI-RS resources within the CSI-RS measurement window configured by the network-side device, where $Q_1$ is a positive integer. For example, $Q_1$ is 1, and the number $N_{CSI-RS}$ of CSI-RS resources within the CSI-RS measurement window configured by the network-side device is 6. Then it may be determined that the length $N_4$ of the TD basis vector or the length $N_4$ of the DD basis vector is 6.

In a possible implementation, it may be determined that the length of the TD basis vector or the length of the DD basis vector is equal to $\dfrac{N_{CSI-RS}}{C_u} Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD. For example, the $Q_1$ is 1, the number $N_{CSI-RS}$ of CSI-RS resources configured by the network-side device is 4, and the $C_u$ is 2ms. Then it may be determined that the length $N_4$ of the TD basis vector or

the length $N_4$ of the DD basis vector is $\dfrac{4}{2} \times 1 = 2$, that is, the length $N_4$ of the TD basis vector or the length $N_4$ of the DD basis vector is 2.

It should be noted that, in embodiment of the disclosure, when the number $N_{CSI-RS}$ of CSI-RS resources is greater than 1, the $N_{CSI-RS}$ CSI-RS resources may be in the same time domain type or different time domain types. The time domain type may be periodic, semi-persistent, and non-periodic types. In addition, in embodiments of the disclosure, when the number $N_{CSI-RS}$ of CSI-RS resources is greater than 1, the $N_{CSI-RS}$ CSI-RS resources may also be CSI-RS resources with different functions. For example, a CSI-RS resource is configured as a CSI-RS resource for channel acquisition, and the remaining CSI-RS resources are configured as CSI-RS resources for time-frequency tracking.

In some embodiments of the disclosure, for example, the first parameter is the size of the CSI-RS measurement window and the interval between the time instances of the adjacent CSI measurements. Then the length of the TD basis vector or the length of the DD basis vector may be determined based on the size of the CSI-RS measurement window and the interval between the time instances of the adjacent CSI measurements configured by the network-side device.

In a possible implementation, it may be determined that the length of the TD basis vector or the length of the DD basis vector is equal to $\dfrac{(W_{meas}-1)}{d}+1$, where $W_{meas}$ represents the size of the CSI-RS measurement window, and d represents the interval between the time instances of the adjacent CSI measurements, $d$ represents a maximum interval or a minimum interval between adjacent CSI measurements, or $d$ represents an average of intervals of multiple adjacent CSI measurements.

In some embodiments of the disclosure, for example, the first parameter is the number of CSI measurements or the number of CSI measurements within the CSI-RS measurement window. Then the length of the TD basis vector or the length of the DD basis vector may be determined based on the number of CSI measurements or the number of CSI measurements within the CSI-RS measurement window configured by the network-side device.

In a possible implementation, it may be determined that the length of the TD basis vector or the length of the DD basis vector is equal to the number of CSI measurements or the number of CSI measurements within the CSI-RS measurement window configured by the network-side device. For example, the number B of CSI measurements configured by the network-side device is 2. Then the length $N_4$ of the TD basis vector or the length $N_4$ of the DD basis vector is 2. For another example, the number B of CSI measurements within the CSI-RS measurement window configured by the network-side device is 2. Then the length $N_4$ of the TD basis vector or the length $N_4$ of the DD basis vector is 2.

In a possible implementation, it may be determined that the length of the TD basis vector or the length of the DD basis vector is equal to $Q_2$ times of the number of CSI measurements configured by the network-side device, where $Q_2$ is a positive integer.

In a possible implementation, it may be determined that the length of the TD basis vector or the length of the DD basis vector is equal to $Q_2$ times of the number of CSI measurements within the CSI-RS measurement window configured by the network-side device, where $Q_2$ is a positive integer.

In a possible implementation, it may be determined that the length of the TD basis vector or the length of the DD basis vector is equal to $\dfrac{B}{C_u}Q_2$ , where $Q_2$ is a positive integer, $B$ represents the number of CSI measurements or the number of CSI measurements within the CSI-RS measurement window configured by the network-side device, and $C_u$ represents a compression unit in the TD. For example, the $Q_2$ is 1, the number B of CSI measurements or the number B of CSI measurements within the CSI-RS measurement window configured by the network-side device is 4, and the $C_u$ is 2ms. Then the length $N_4$ of the TD basis vector or the length $N_4$ of the DD basis vector is $\dfrac{4}{2} \times 1 = 2$ , that is, the length $N_4$ of the TD basis vector or the length $N_4$ of the DD basis vector is 2.

In some embodiments of the disclosure, for example, the first parameter is the parameter W. Then the length of the TD basis vector or the length of the DD basis vector may be determined based on the parameter W configured by the network-side device.

In a possible implementation, it may be determined that the length of the TD basis vector or the length of the DD basis vector is equal to $\dfrac{W}{C_u}$ , where W mod $C_u$ =0, $C_u$ represents the compression unit in the TD, and mod represents a modulo function. For example, a value of the parameter W is 4 and $C_u = 2ms$. Then the length $N_4$ of the TD basis vector or the length $N_4$ of the DD basis vector is 2.

In a possible implementation, it may be determined that the length of the TD basis vector or the length of the DD basis vector is equal to $\left\lceil \dfrac{W}{C_u} \right\rceil$ or $\left\lfloor \dfrac{W}{C_u} \right\rfloor$ , where W mod $C_u$ =0, $\lceil \; \rceil$ represents ceiling, and $\lfloor \; \rfloor$ represents flooring. For example, the value of the parameter W is 5 and $C_u = 2ms.$ Then the length $N_4$ of the TD basis vector or the length $N_4$ of the DD basis vector is $\left\lceil \dfrac{5}{2} \right\rceil = 3$ , or the length $N_4$ of the TD basis vector or the length $N_4$ of the DD basis vector is $\left\lfloor \dfrac{5}{2} \right\rfloor = 2$ . In some embodiments of the disclosure, the parameter W is determined by at least one of following parameters 1) to 4):

1) a time slot corresponding to a CSI reporting time instance;
2) a time slot where a CSI reference resource is located;
3) a time slot corresponding to a left boundary or a right boundary of a CSI-RS measurement window; or
4) a time slot corresponding to a left boundary or a right boundary of a CSI reporting window. It should be noted that, the CSI reporting window is configured by the network-side device, and the CSI reporting window configured aims to facilitate a description that the CSI is reported once within a certain time range, and there may be a possibility that the CSI reporting window is not configured.

For example, the parameter $W$ represents the length $W_{CSI}$ of the CSI reporting window, that is, $W=W_{CSI}$. Or, the parameter $W$ represents the length $W_{meas}$ of the CSI measurement window, that is, $W=W_{meas}$. Or, the parameter $W$ represents a time length between a time slot corresponding to a time instance when a first CSI-RS resource is received for a CSI measurement and a time slot corresponding to a time instance when the right boundary of the CSI reporting window is located, and a unit of the length of the time is one time slot. Or, the parameter $W$ represents a time length between the time slot corresponding to the right boundary or the left boundary of the CSI-RS measurement window and a time slot corresponding to a time instance when the right boundary of the CSI reporting window is located. Or, the parameter $W$ represents a time length between the time slot corresponding to the CSI reference resource and a time slot corresponding to a time instance when the right boundary of the CSI reporting window is located

It should be noted that, in embodiments of the disclosure, values of $N_{CSI-RS}$, B, $d$, $Q_1$, $Q_2$, $W_{meas}$, and $W_{meas}$ mentioned above may be reported by the terminal, configured by the network-side device, or pre-defined by the terminal and the network-side device.

In some embodiments of the disclosure, the network-side device also needs to determine the compression unit $C_u$ of the TD. The compression unit $C_u$ may be determined in any of the following ways.

In a possible implementation, the compression unit $C_u$ may be $\alpha T_c$, where $\alpha$ is an integer less than or equal to 1, and $T_c$ represents a channel coherence time.

$$T_c = \frac{1}{f_d}$$

The coherence time $T_c = \frac{1}{f_d}$, where $f_d$ represents a Doppler extension of the channel.

In a possible implementation, the compression unit $C_u$ may be a measurement period of the CSI-RS resource.

In a possible implementation, the compression unit $C_u$ may be $\beta d_1$, where $\beta$ is an integer greater than or equal to 1, and $d_1$ represents the interval between the adjacent CSI measurements. For example, for multiple uniform CSI measurements, $d_1$ may represent the interval between the adjacent CSI measurements, and values of $d_1$ and $\beta$ may be employed to determine the compression unit $C_u$.

In a possible implementation, the compression unit $C_u$ may be $\beta d_2$, where $\beta$ is an integer greater than or equal to 1, and $d_2$ represents a maximum interval or a minimum interval between adjacent CSI measurements, or $d_2$ may also represent an average of intervals of multiple adjacent CSI measurements. For example, for non-uniform multiple CSI measurements, $d_2$ may represent a maximum interval or a minimum interval between the adjacent CSI measurements, and values of $d_2$ and $\beta$ may be employed to determine the compression unit $C_u$.

For example, it is assumed that the terminal (UE) moves at a velocity of 27 Km/h, and a system carrier frequency of a cell where the UE is located is 4 GHz. Then a maximum Doppler extension of the user may be represented by $f_d = 100$Hz, and a channel coherence time

$$T_c = \frac{1}{f_d} = 10\,ms$$

of the UE may be represented as $T_c = \frac{1}{f_d} = 10\,ms$.
The compression unit used to determine the length $N_4$ of the TD or the length $N_4$ of the DD basis vector may be represented by $C_u = \alpha T_c$. In case that $\alpha$ is 0.5 configured by the network-side device, the compression unit $C_u = \alpha T_c = 5ms$. For another example, an interval of adjacent CSI-RS resource measurements configured by the network-side device is d=2 ms, the compression unit $C_u = d\beta$. It is assumed that the value of $\beta$ is predefined value 1. Then the compressed unit $C_u = 2$ ms. Then the length $N_4$ of the TD or the length $N_4$ of the DD basis vector is equal to W or $C_u$. The meaning of the W may be represented by any one of the above meanings.

It should be noted that, in embodiments of the disclosure, the values of $\alpha$ and $\beta$ above may be reported by the terminal, configured by the network-side device, or predefined by the terminal and the network-side device. In addition, $f_d$ mentioned above may be reported to the network-side device by the terminal.

At block 502, a codebook parameter is configured for a terminal. Actions at block 502 may be respectively realized by employing any one of embodiments of the disclosure, which is not limited in embodiments of the disclosure and is not described in detail.

At block 503, the length of the TD basis vector or the length of the DD basis vector and the codebook parameter are sent to the terminal. Actions at block 503 may be respectively realized by employing any one of embodiments of the disclosure, which is not limited in embodiments of the disclosure and is not described in detail.

At block 504, codebook indication information corresponding to a data transmission layer determined by the terminal based on the length and the codebook parameter is received. Actions at block 504 may be respectively realized by employing any one of embodiments of the disclosure, which is not limited in embodiments of the disclosure and is not described in detail.

At block 505, precoding matrixes corresponding to different time instances are determined based on the codebook indication information.

In an implementation, the precoding matrixes corresponding to different time instances are determined by employing a codebook structure or a PMI prediction algorithm based on the codebook indication information and a way of determining the length of the TD basis vector or the length of the DD basis vector. In other words, in case that different ways are employed to determine the length $N_4$ of the TD basis vector or the length $N_4$ of the DD basis vector, the precoding matrixes are obtained in different ways, such as employing the prediction algorithm to predict the precoding matrixes, or directly employing the codebook structure to calculate the precoding matrixes.

For example, it is assumed that the network-side device (such as a base station) configures a non-periodic CSI-RS resource set to the terminal (UE), and the non-periodic CSI-RS resource set includes four non-periodic CSI-RS resources. Downlink channel information at four different time instances within one CSI-RS measurement window is measured based on the four non-periodic CSI-RS resources, and an interval of adjacent CSI-RS resources is d. FIG. 6 illustrates a relationship between a CSI-RS measurement and a CSI reporting in a TD, where a measurement time instance of the first CSI-RS resource is $t_0$, and a measurement time instance of a last CSI-RS resource is $t_0+3$. Based on the downlink channels measured at the CSI-RS resources at the four different time instances and based on the codebook parameter configured by the base station, the UE calculates $W_1$ combined by the multiple SD basis vectors, the combination coefficient $W_2$, $W_f$ combined by the multiple FD basis vectors, and $W_t$ or $W_d$ combined by the multiple TD basis vectors or DD basis vectors in the codebook. The UE reports these parameters to the base station at time $t_0+n$, and the base station calculates the precoding matrixes corresponding to time instances with the length $N_4$ by employing

$$\left(W_f^* \otimes W_1\right) W_2 W_t^{\mathrm{H}}$$

or $W_1 \bar{W}_2 (W_f \otimes W_d)^H$. $t_0+n$ represents the left boundary of the CSI reporting window, and $t_0+l$ represents the right boundary of the CSI reporting window. The length $N_4$ of the TD basis vector or the length $N_4$ of the DD basis vector is equal to the number 4 of CSI-RS resources within the CSI-RS measurement window as illustrated in FIG. 6, or the length $N_4$ of the TD or the length $N_4$ of the DD basis vector is equal to the number B=4 of CSI-RS measurements within the CSI-RS measurement window, or, the length $N_4$ of the TD or the length $N_4$ of the DD basis vector is equal to

$$\frac{(W_{meas}-1)}{d}+1=4$$

, where $W_{meas}$=4, and $d$=1. When $N_4$=4, the base station may employ the PMI prediction algorithm to calculate precoding matrixes corresponding to different time instances with a time range from $t_0$+3 to $t_0$+$l$.

For example, when the length $N_4$ of the TD basis vector or the length $N_4$ of the DD basis vector is defined as

$$\frac{W_{CSI}}{C_u}$$

, where $W_{CSI}$ represents a length of the CSI reporting window and $C_u$ represents the compression unit in the TD. The length $N_4$ is configured for the UE by the base station via a radio resource control (RRC) signaling, and the UE reports S (S>1) selected basis vectors with a length $N_4$ to the base station. Then the base station may employ the above codebook algorithm to directly calculate the precoding matrixes corresponding to different time instances within the CSI reporting window. For another example, when the length $N_4$ of the TD basis vector or the length $N_4$ of the DD basis vector is equal to Q times of B, or the length $N_4$ of the TD basis vector or the length $N_4$ of the DD basis vector is equal to Q times of B or $C_u$, where B=4, Q=5, $C_u$ =1, that is, $N_4$=20. Let a matrix combined by V≥1 TD basis vectors or DD basis vectors being represented as $W_d = [f_{d,1} \ldots f_{d,V}] \in C^{T \times V}$, where a $V^{th}$ TD basis vector or DD basis vector is

$$f_{d,v} = \left[ 1, e^{j\frac{2\pi v}{N_4}}, \cdots, e^{j\frac{2\pi v(N_4-1)}{N_4}} \right]$$

presented by .

The precoding matrixes corresponding to $N_4$ time instances may be obtained by

$$\left( W_f^* \otimes W_1 \right) W_2 W_t^H$$

or $W_1 \tilde{W}_2 (W_f \otimes W_d)^H$, where $W_1$ and $W_f$ follow a conventional calculation way of the Rel-16 or 17 Type II, and $W_d$ or $W_t$ selects the V basis vectors from the codebook combined by the basis vectors with the length $N_4$.

For calculating precoding matrixes corresponding to $N_5$ time instances after the $N_4$ time instances, that is, predicting precoding matrixes corresponding to $N_3$ > $N_4$ time instances may be calculated in the following ways: first, let $t_{d_v}$ =[1, ... , $e^{j2\pi vq}$ , .. $e^{j2\pi v(Q-1)}$]$^T \otimes f_{d,v}$, v $\in$ {1,⋯,V}, then $W_{t_d} = [t_{d_1} \ldots t_{d_v}] \in C^{N_5 \times V}$, where $N_5 = QN_4$. Then, the base station calculates the precoding matrixes corresponding to the $N_5$ time instances by

$$\left( W_f^* \otimes W_1 \right) \tilde{\tilde{W}}_2 W_{t_d}^H$$

.

In conclusion, in embodiments of the disclosure, the length of the TD basis vector or the length of the DD basis vector may be determined, and then the TD basis vector or the DD basis vector employed in the codebook is determined by employing the length. In this way, by introducing the TD basis vector or the DD basis vector on the basis of the Rel-16 or 17 Type II codebook, a precoding calculation or prediction at a future time instance may be realized, such that a calculated preset code or a predicted preset code matches a channel at a future time instance. Not only may preset codes corresponding to different time instances be determined, but also a redundant configuration of the codebook parameter or a redundant reporting of the codebook parameter may be avoided, thus reducing a signaling configuration overhead or a reporting feedback overhead.

In the embodiments of the disclosure, the method is introduced from the perspective of terminal and network-side device. In order to realize the functions of the method in the above embodiments of the disclosure, the terminal and the network-side device may include a hardware structure and a software module in order to realize the above functions in the form of a hardware structure, a software module, or a hardware structure plus a software module. One of these functions may be performed by a hardware structure, a software module, or a hardware structure plus a software module.

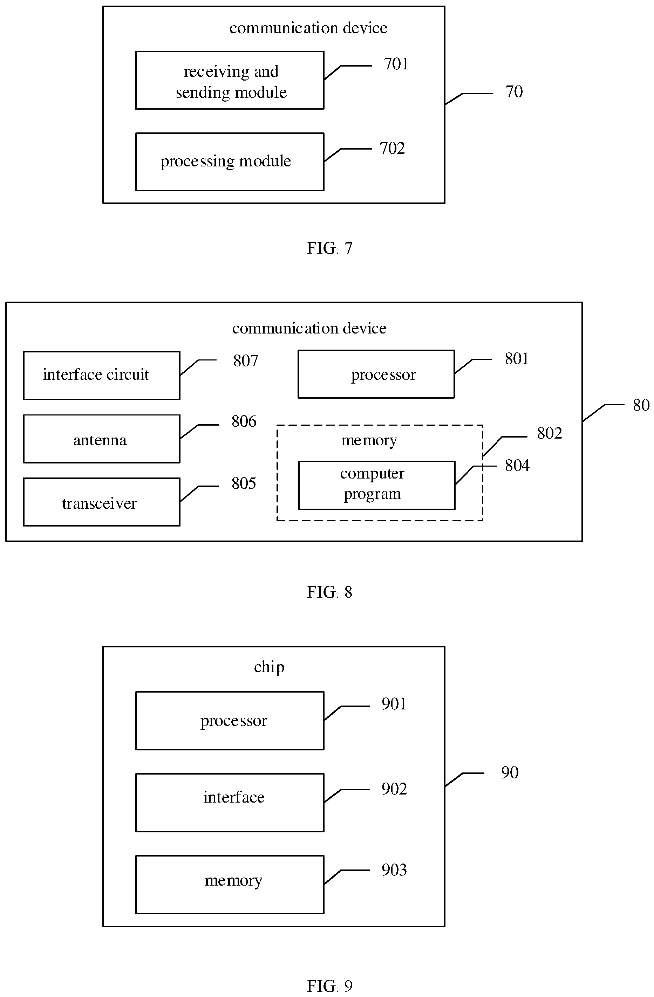

Referring to FIG. 7, FIG. 7 is a block diagram illustrating a communication device 70 according to an embodiment of the disclosure. The communication device 70 illustrated in FIG. 7 may include a receiving and sending module 701 and a processing module 702. The receiving and sending module 701 may include a sending module and/or a receiving module. The sending module is configured to achieve a sending function, the receiving module is configured to achieve a receiving function, and the receiving and sending module 701 may achieve the sending function and/or the receiving function.

The communication device 70 may be a terminal, a device in a terminal, or a device used in combination with a terminal. Or, the communication device 70 may be a network-side device, a device within a network-side device, or a device used in combination with a network-side device.

The communication device 70 is the terminal. The processing module 702 is configured to determine codebook indication information corresponding to a data transmission layer based on a length of a TD basis vector or a length of a DD basis vector, and a codebook parameter configured by a network-side device; and the receiving and sending module 701 is configured to send CSI including the codebook indication information to the network-side device, in which the codebook indication information indicates the network-side device to determine precoding matrixes corresponding to different time instances.

In an implementation, the processing module 702 is specifically configured to: determine the length of the TD basis vector or the length of the DD basis vector;

and determine the codebook indication information corresponding to the data transmission layer based on the length and the codebook parameter configured by the network-side device.

In an implementation, the processing module 702 is specifically configured to determine the length of the TD basis vector or the length of the DD basis vector based on a first parameter configured by the network-side device.

In a possible implementation, the first parameter is a number of CSI-RS resources or a number of CSI-RS resources within a CSI-RS measurement window. The processing module 702 is specifically configured to determine that the length of the TD basis vector or the length of the DD basis vector is equal to the number of CSI-RS resources or the number of CSI-RS resources within the CSI-RS measurement window configured by the network-side device; determine that the length of the TD basis vector or the length of the DD basis vector is equal to $Q_1$ times of the number of CSI-RS resources configured by the network-side device; determine that the length of the TD basis vector or the length of the DD basis vector is equal to $Q_1$ times of the number of CSI-RS resources within the CSI-RS measurement window configured by the network-side device; or determine that the length of the TD basis vector or the length of the DD basis vector is equal to $\dfrac{N_{CSI-RS}}{C_u}Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

In a possible implementation, the first parameter is a size of a CSI-RS measurement window and an interval between time instances of adjacent CSI measurements. The processing module 702 is specifically configured to determine that the length of the TD basis vector or the length of the DD basis vector is equal to $\dfrac{(W_{meas}-1)}{d}+1$, where $W_{meas}$ represents the size of the CSI-RS measurement window, and d represents the interval between the time instances of the adjacent CSI measurements, a maximum interval or a minimum interval between adjacent CSI measurements, or an average of intervals of multiple adjacent CSI measurements.

In a possible implementation, the first parameter is a number of CSI measurements or a number of CSI measurements within a CSI-RS measurement window. The processing module 702 is specifically configured to determine that the length of the TD basis vector or the length of the DD basis vector is equal to the number of CSI-RS measurements or the number of CSI-RS measurements within the CSI-RS measurement window configured by the network-side device; determine that the length of the TD basis vector or the length of the DD basis vector is equal to $Q_2$ times of the number of CSI measurements configured by the network-side device; determine that the length of the TD basis vector or the length of the DD basis vector is equal to $Q_2$ times of the number of CSI measurements within the CSI-RS measurement window configured by the network-side device; or determine that the length of the TD basis vector or the length of the DD basis vector is equal to $\dfrac{B}{C_u}Q_2$, where $Q_2$ is a positive integer, B represents the number of CSI measurements or the number of CSI measurements within the CSI-RS measurement window configured by the network-side device, and $C_u$ represents a compression unit in a TD.

In a possible implementation, the first parameter is a parameter W. The processing module 702 is specifically configured to determine that the length of the TD basis vector or the length of the DD basis vector is equal to $\dfrac{W}{C_u}$, where $W \bmod C_u = 0$, and $C_u$ represents a compression unit in a TD; or determine that the length of the TD basis vector or the length of the DD basis vector is equal to $\left\lceil \dfrac{W}{C_u} \right\rceil$ or $\left\lfloor \dfrac{W}{C_u} \right\rfloor$, where $W \bmod C_u \neq 0$, $\lceil \ \rceil$ represents ceiling, and $\lfloor \ \rfloor$ represents flooring, in which the parameter W is determined by at least one of following parameters 1) to 4): 1) a time slot corresponding to a CSI reporting time instance; 2) a time slot where a CSI reference resource is located; 3) a time slot corresponding to a left boundary or a right boundary of a CSI-RS measurement window; or 4) a time slot corresponding to a left boundary or a right boundary of a CSI reporting window.

In a possible implementation, the processing module 702 is further configured to determine the compression unit $C_u$ in the TD.

In a possible implementation, the compression unit $C_u$ is $\alpha T_c$, where $\alpha$ is an integer less than or equal to 1, and $T_c$ represents a channel coherence time; the compression unit $C_u$ is a measurement period of the CSI-RS resource; the compression unit $C_u$ is $\beta d_1$, where $\beta$ is an integer greater than or equal to 1, and $d_1$ represents the interval between the adjacent CSI measurements; or the compression unit $C_u$ is $\beta d_2$, where $\beta$ is an integer greater than or equal to 1, and $d_2$ represents the maximum interval or the minimum interval between the adjacent CSI measurements, or the average of the intervals of the multiple adjacent CSI measurements.

In a possible implementation, the processing module 702 is specifically configured to determine the length of the TD basis vector or the length of the DD basis vector based on Doppler offset information and a Doppler extension estimated based on a CSI-RS by the terminal.

In a possible implementation, the processing module 701 is further configured to receive the length of the TD basis vector or the length of the DD basis vector configured by the network-side device.

In a possible implementation, the codebook indication information at least includes one or more combinations of: a matrix combined by at least one SD basis vector, a combination coefficient matrix, a matrix combined by at least one FD basis vector, or a matrix combined by at least one TD basis vector or at least one DD basis vector.

The communication device 70 is the network-side device. The processing module 702 is configured to determine a length of a TD basis vector or a length of a DD basis vector; the processing module 702 is further configured to configure a codebook parameter for a terminal; the receiving and sending module 701 is configured to send the length of the TD basis vector or the length of the DD basis vector and the codebook parameter to the terminal; the receiving and sending module 701 is further configured to receive codebook indication information corresponding to a data transmission layer determined by the length and the codebook parameter of the terminal; and the processing module 702 is further configured to determine precoding matrixes corresponding to different time instances based on the codebook indication information.

In an implementation, the processing module 702 is specifically configured to determine the length of the TD basis vector or the length of the DD basis vector based on a first parameter configured by the network-side device.

In a possible implementation, the first parameter is a number of CSI-RS resources or a number of CSI-RS resources within a CSI-RS measurement window. The processing module 702 is specifically configured to determine that the length of the TD basis vector or the length of the DD basis vector is equal to the number of CSI-RS resources or the number of CSI-RS resources within the CSI-RS measurement window configured by the network-side device; determine that the length of the TD basis vector or the length of the DD basis vector is equal to $Q_1$ times of the number of CSI-RS resources configured by the network-side device; determine that the length of the TD basis vector or the length of the DD basis vector is equal to $Q_1$ times of the number of CSI-RS resources within the CSI-RS measurement window configured by the network-side device; or determine that the length of the TD basis vector or the length of the DD basis vector is equal to $\frac{N_{CSI-RS}}{C_u} Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

In a possible implementation, the first parameter is a size of a CSI-RS measurement window and an interval between time instances of adjacent CSI measurements. The processing module 702 is specifically configured to determine that the length of the TD basis vector or the length of the DD basis vector is equal to

$\frac{(W_{meas}-1)}{d} + 1$, where $W_{meas}$ represents the size of the CSI-RS measurement window, and d represents the interval between the time instances of the adjacent CSI measurements, a maximum interval or a minimum interval between adjacent CSI measurements, or an average of intervals of multiple adjacent CSI measurements.

In a possible implementation, the first parameter is a number of CSI measurements or a number of CSI measurements within a CSI-RS measurement window. The processing module 702 is specifically configured to determine that the length of the TD basis vector or the length of the DD basis vector is equal to the number of CSI-RS measurements or the number of CSI-RS measurements within the CSI-RS measurement window configured by the network-side device; determine that the length of the TD basis vector or the length of the DD basis vector is equal to $Q_2$ times of the number of CSI measurements configured by the network-side device; determine that the length of the TD basis vector or the length of the DD basis vector is equal to $Q_2$ times of the number of CSI measurements within the CSI-RS measurement window configured by the network-side device; or determine that the length of the TD basis vector or the length of the DD basis vector is equal to $\frac{B}{C_u} Q_2$, where $Q_2$ is a positive integer, B represents the number of CSI measurements or the number of CSI measurements within the CSI-RS measurement window configured by the network-side device, and $C_u$ represents a compression unit in a TD.

In a possible implementation, the first parameter is a parameter W. The processing module 702 is specifically configured to determine that the length of the TD basis vector or the length of the DD basis vector is equal to $\frac{W}{C_u}$, where W mod $C_u = 0$, and $C_u$ represents a compression unit in a TD; or determine that the length of the TD basis vector or the length of the DD basis vector is

equal to $\left\lceil \frac{W}{C_u} \right\rceil$ or $\left\lfloor \frac{W}{C_u} \right\rfloor$, where W mod $C_u \neq 0$, $\lceil \rceil$ represents ceiling, and $\lfloor \rfloor$ represents flooring, in which the parameter W is determined by at least one of following parameters 1) to 4): 1) a time slot corresponding to a CSI reporting time instance; 2) a time slot where a CSI reference resource is located; 3) a time slot corresponding to a left boundary or a right boundary of a CSI-RS measurement window; or 4) a time slot corresponding to a left boundary or a right boundary of a CSI reporting window.

In a possible implementation, the processing module 702 is further configured to determine the compression unit $C_u$ in the TD.

In a possible implementation, the compression unit $C_u$ is $\alpha T_c$, where $\alpha$ is an integer less than or equal to 1, and $T_c$ represents a channel coherence time; the com-

pression unit $C_u$ is a measurement period of the CSI-RS resource; the compression unit $C_u$ is $\beta d_1$, where $\beta$ is an integer greater than or equal to 1, and $d_1$ represents the interval between the adjacent CSI measurements; or the compression unit $C_u$ is $\beta d_2$, where $\beta$ is an integer greater than or equal to 1, and $d_2$ represents the maximum interval or the minimum interval between the adjacent CSI measurement time instances, or the average of the intervals of the multiple adjacent CSI measurements.

In an implementation, the processing module 702 is specifically configured to determine the length of the TD basis vector or the length of the DD basis vector based on Doppler offset information and a Doppler extension reported by the terminal.

In a possible implementation, the processing module 702 is specifically configured to determine precoding matrixes corresponding to different time instances by employing a codebook structure or a PMI prediction algorithm based on the codebook indication information and a way of determining the length of the TD basis vector or the length of the DD basis vector.

With respect to the apparatus in the above embodiments, the detailed implementation in which each module performs an operation has been described in detail in the method embodiments, which will not be elaborated here.

Referring to FIG. 8, FIG. 8 is a block diagram illustrating a communication device according to another embodiment of the disclosure. The communication device 80 may be a network-side device, a terminal, or a chip, a chip system, a processor, etc. that supports the network-side device to implement the above method, or a chip, a chip system, or a processor, etc. that supports the terminal to implement the above method. The device may be used to implement the method in the above method embodiments. For details, please refer to the description in the above method embodiments. The communication device 80 may include one or more processors 801. The processor 801 may be a general-purpose processor or a special-purpose processor, for example, a baseband processor or a central processing unit. The baseband processor may be configured to process communication protocols and communication data, and the central processing unit may be configured to control the communication device (such as a base station, a baseband chip, a terminal, a terminal chip, a DU or CU, etc.), to execute a computer program, and to process computer program data.

Alternatively, the communication device 80 may also include one or more memory 802 for storing a computer program 804. When the computer program 804 is executed by the processor 801, the communication device 80 is caused to perform the method in the above method embodiments. Alternatively, data may also be stored in the memory 802. The communication device 80 and the memory 802 may be separate or integrated together.

Alternatively, the communication device 80 may also include a transceiver 805 and an antenna 806. The transceiver 805 may be called a transceiver unit, a transceiver machine or a transceiver circuit, etc., to implement a receiving and sending function. The transceiver 805 may include a receiver and a sender. The receiver may be called a receiving machine or a receiving circuit, etc. to implement a receiving function; and the sender may be called a sending machine or a sending circuit, etc. to implement a sending function.

Alternatively, the communication device 80 may also include one or more interface circuits 807. The interface circuit 807 is configured to receive code instructions and transmit the code instructions to the processor 801. When the code instructions are run in the processor 801, the communication device 80 is caused to perform the method in the above method embodiments. The communication device 80 is a terminal. The processor 801 is configured to perform actions at block 201 in FIG. 2, and actions at block 301 and block 302 in FIG. 3. The transceiver 805 is configured to perform actions at block 202 in FIG. 2, and actions at block 303 in FIG. 3. The communication device 80 is the network-side device: The transceiver 805 is configured to perform actions at block 401, block 402, and block 405 in FIG. 4; and to perform actions at block step 501, block 502, and block 505 in FIG. 5. The processor 801 is configured to perform actions at block 403 and block 404 in FIG. 4, and to perform actions at block 503 and block 504 in FIG. 5.

In an implementation, the processor 801 may include a transceiver for implementing the receiving and sending function. For example, the transceiver may be a transceiver circuit, an interface, or an interface circuit. The transceiver circuit, interface, or interface circuit for performing the receiving and sending function may be separate or integrated. The transceiver circuit, interface or interface circuit may be configured to read and write code or data, or the transceiver circuit, interface or interface circuit may be configured for the transmission and delivering of signals.

In an implementation, a computer program may be stored in the processor 801. When the computer program is run in the processor 801, the communication device 80 is caused to perform the method in the above method embodiments. The computer program may be solidified in the processor 801. In this case, the processor 801 may be implemented by hardware.

In an implementation, the communication device 80 includes a circuit that may realize the sending or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be the network-side device or the terminal, but the scope of the communication device in the disclosure is not limited to this, and the structure of the communication device may not be limited by FIG. 8. The communication device may be an independent device or part of a larger device. For example, the communication device may be:

(1) an independent IC, or a chip, or a chip system or a subsystem;
(2) a collection including one or more IC, alternatively, the IC collection also including storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network-side device, a cloud device, an artificial intelligence device, etc.;
(6) others.

For the case where the communication device may be the chip or the chip system, please refer to the block diagram of a chip in FIG. 9. The chip illustrated in FIG. 9 includes a processor 901 and an interface 903. There may be one or more processors 901, and there may be one or more interfaces 902.

For the case where the chip is configured to realize the function of the terminal in the embodiments of the disclosure:

the processor 901 is configured to determine codebook indication information corresponding to a data transmission layer based on a length of a TD basis vector or a length of a DD basis vector, and a codebook parameter configured by a network-side device; the interface 902 is configured to send CSI including the codebook indication information to the network-side device, in which the codebook indication information indicates the network-side device to determine precoding matrixes corresponding to different time instances.

In an implementation, the processor 901 is specifically configured to determine the length of the TD basis vector or the length of the DD basis vector; and determine the codebook indication information corresponding to the data transmission layer based on the length and the codebook parameter configured by the network-side device.

In an implementation, the processor 901 is specifically configured to determine the length of the TD basis vector or the length of the DD basis vector based on a first parameter configured by the network-side device.

In a possible implementation, the first parameter is a number of CSI-RS resources or a number of CSI-RS resources within a CSI-RS measurement window. The processor 901 is specifically configured to determine that the length of the TD basis vector or the length of the DD basis vector is equal to the number of CSI-RS resources or the number of CSI-RS resources within the CSI-RS measurement window configured by the network-side device; determine that the length of the TD basis vector or the length of the DD basis vector is equal to $Q_1$ times of the number of CSI-RS resources configured by the network-side device; determine that the length of the TD basis vector or the length of the DD basis vector is equal to $Q_1$ times of the number of CSI-RS resources within the CSI-RS measurement window configured by the network-side device; or determine that the length of the TD basis vector or the length of the DD basis vector is equal to $\dfrac{N_{CSI-RS}}{C_u}Q_1$, where $Q_1$ is a positive integer, $N_{CSI-RS}$ represents the number of CSI-RS resources or the number of CSI-RS resources within CSI-RS measurement window configured by the network-side device, and $C_u$ represents a compression unit in a TD.

In a possible implementation, the first parameter is a size of a CSI-RS measurement window and an interval between time instances of adjacent CSI measurements. The processor 901 is specifically configured to determine that the length of the TD basis vector or the length of the DD basis vector is equal to $\dfrac{(W_{meas}-1)}{d}+1$, where $W_{meas}$ represents the size of the CSI-RS measurement window, and $d$ represents the interval between the time instances of the adjacent CSI measurements, $d$ represents a maximum interval or a minimum interval between adjacent CSI measurements, or d represents an average of intervals of multiple adjacent CSI measurements.

In a possible implementation, the first parameter is a number of CSI measurements or a number of CSI measurements within a CSI-RS measurement window. The processer 901 is specifically configured to determine that the length of the TD basis vector or the length of the DD basis vector is equal to the number of CSI measurements or the number of CSI measurements within the CSI-RS measurement window configured by the network-side device; determine that the length of the TD basis vector or the length of the DD basis vector is equal to $Q_2$ times of the number of CSI measurements configured by the network-side device; determine that the length of the TD basis vector or the length of the DD basis vector is equal to $Q_2$ times of the number of CSI measurements within the CSI-RS measurement window configured by the network-side device; or determine that the length of the TD basis vector or the length of the DD basis vector is equal to $\dfrac{B}{C_u} Q_2$, where $Q_2$ is a positive integer, B represents the number of CSI measurements or the number of CSI measurements within the CSI-RS measurement window configured by the network-side device, and $C_u$ represents a compression unit in a TD.

In a possible implementation, the first parameter is a parameter W. The processer 901 is specifically configured to determine that the length of the TD basis vector or the length of the DD basis vector is equal to $\dfrac{W}{C_u}$, where W mod $C_u$=0, $C_u$ represents a compression unit in a TD; or determine that the length of the TD basis vector or the length of the DD basis vector is equal to $\left\lceil \dfrac{W}{C_u} \right\rceil$ or $\left\lfloor \dfrac{W}{C_u} \right\rfloor$, where W mod $C_u \neq 0$, $\lceil \ \rceil$ represents ceiling, and $\lfloor \ \rfloor$ represents flooring, in which the parameter W is determined by at least one of following parameters 1) to 4): 1) a time slot corresponding to a CSI reporting time instance; 2) a time slot where a CSI reference resource is located; 3) a time slot corresponding to a left boundary or a right boundary of a CSI-RS measurement window; or 4) a time slot corresponding to a left boundary or a right boundary of a CSI reporting window.

In a possible implementation, the processer 901 is further configured to determine the compression unit $C_u$ in the TD.

In a possible implementation, the compression unit $C_u$ is $\alpha T_c$, where $\alpha$ is an integer less than or equal to 1, and $T_c$ represents a channel coherence time; the compression unit $C_u$ is a measurement period of the CSI-RS resource; the compression unit $C_u$ is $\beta d_1$, where $\beta$ is an integer greater than or equal to 1, and $d_1$ represents the interval between the time instances of the adjacent CSI measurements; or the compression unit $C_u$ is $\beta d_2$, where $\beta$ is an integer greater than or equal to 1, and $d_2$ represents the maximum interval or the minimum interval between the adjacent CSI measurements, or $d_2$ may also represents the average of the intervals of the multiple adjacent CSI measurements.

In a possible implementation, the processer 901 is specifically configured to determine the length of the TD basis vector or the length of the DD basis vector based on Doppler offset information and a Doppler extension estimated by the terminal employing a CSI-RS.

In a possible implementation, the interface 902 is further configured to receive the length of the TD basis vector or the length of the DD basis vector configured by the network-side device.

In a possible implementation, the codebook indication information at least includes one or more combinations of: a matrix combined by at least one SD basis vector, a combination coefficient matrix, a matrix combined by at least one FD basis vector, or a matrix combined by at least one TD basis vector or at least one DD basis vector.

For the case where the chip is configured to realize the function of the network-side device in the embodiments of the disclosure:

The processor 901 is configured to determine a length of a TD basis vector or a length of a DD basis vector; the processor 901 further configures a codebook parameter for a terminal; the interface 902 is configured to send the length of the TD basis vector or the length of the DD basis vector and the codebook parameter to the terminal; the interface 902 is further configured to receive codebook indication information corresponding to a data transmission layer determined by the terminal based on the length and the codebook parameter; and the processor 901 is further configured to determine precoding matrixes corresponding to different time instances based on the codebook indication information.

In an implementation, the processor 901 is configured to determine the length of the TD basis vector or the length of the DD basis vector based on a first parameter configured by the network-side device.

In a possible implementation, the first parameter is a number of CSI-RS resources or a number of CSI-RS resources within a CSI-RS measurement window. The processer 901 is specifically configured to determine that the length of the TD basis vector or the length of the DD basis vector is equal to the number of CSI-RS resources or the number of CSI-RS resources within the CSI-RS measurement window configured by the network-side device; determine that the length of the TD basis vector or the length of the DD basis vector is equal to $Q_1$ times of the number of CSI-RS resources configured by the network-side device; determine that the length of the TD basis vector or the length of the DD basis vector is equal to $Q_1$ times of the number of CSI-RS resources within the CSI-RS measurement window configured by the network-side device; or determine that the length of the TD basis vector or the length of the DD basis vector is equal to $\dfrac{N_{CSI-RS}}{C_u} Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

In a possible implementation, the first parameter is a size of a CSI-RS measurement window and an interval between time instances of adjacent CSI measurements. The processer 901 is specifically configured to determine that the length of the TD basis vector or the length of the DD basis vector is equal to $\dfrac{(W_{meas}-1)}{d}+1$ where $W_{meas}$ represents the size of the CSI-RS measurement window, and $d$ represents the interval between the time instances of the adjacent CSI measurements, $d$ represents a maximum interval or a minimum interval between adjacent CSI measurements, or $d$ represents an average of intervals of multiple adjacent CSI measurements.

In a possible implementation, the first parameter is a number of CSI measurements or a number of CSI measurements within a CSI-RS measurement window. The processer 901 is specifically configured to determine that the length of the TD basis vector or the length of the DD basis vector is equal to the number of CSI-RS measurements or the number of CSI-RS measurements within the CSI-RS measurement window configured by the network-side device; determine that the length of the TD basis vector or the length of the DD basis vector is equal to $Q_2$ times of the number of CSI measurements configured by the network-side device; determine that the length of the TD basis vector or the length of the DD basis vector is equal to $Q_2$ times of the number of CSI measurements within the CSI-RS measurement window configured by the network-side device; or determine that the length of the TD basis vector or the length of the DD basis vector is equal to $\dfrac{B}{C_u}Q_2$, where $Q_2$ is a positive integer, B represents the number of CSI measurements or the number of CSI measurements within the CSI-RS measurement window configured by the network-side device, and $C_u$ represents a compression unit in a TD.

In a possible implementation, the first parameter is a parameter W. The processer 901 is specifically configured to determine that the length of the TD basis vector or the length of the DD basis vector is equal to $\dfrac{W}{C_u}$, where $W \bmod C_u = 0$, and $C_u$ represents a compression unit in a TD; or determine that the length of the TD basis vector or the length of the DD basis vector is equal to $\left\lceil \dfrac{W}{C_u} \right\rceil$ or $\left\lfloor \dfrac{W}{C_u} \right\rfloor$, where $W \bmod C_u \neq 0$, $\lceil\ \rceil$ represents ceiling, and $\lfloor\ \rfloor$ represents flooring, in which the parameter W is determined by at least one of following parameters 1) to 4): 1) a time slot corresponding to a CSI reporting time instance; 2) a time slot where a CSI reference resource is located; 3) a time slot corresponding to a left boundary or a right boundary of a CSI-RS measurement window; or 4) a time slot corresponding to a left boundary or a right boundary of a CSI reporting window.

In a possible implementation, the processer 901 is further configured to determine the compression unit $C_u$ in the TD.

In a possible implementation, the compression unit $C_u$ is $\alpha T_c$, where $\alpha$ is an integer less than or equal to 1, and $T_c$ represents a channel coherence time; the com-

pression unit $C_u$ is a measurement period of the CSI-RS resource; the compression unit $C_u$ is $\beta d_1$, where $\beta$ is an integer greater than or equal to 1, and $d_1$ represents the interval between the time instances of the adjacent CSI measurements; or the compression unit $C_u$ is $\beta d_2$, where $\beta$ is an integer greater than or equal to 1, and $d_2$ represents the maximum interval or the minimum interval between the adjacent CSI measurements, or $d_2$ may also represents the average of the intervals of the multiple adjacent CSI measurements.

In a possible implementation, the processer 901 is specifically configured to determine the length of the TD basis vector or the length of the DD basis vector based on Doppler offset information and a Doppler extension reported by the terminal.

In a possible implementation, the processer 901 is specifically configured to determine precoding matrixes corresponding to different time instances by employing a codebook structure or a PMI prediction algorithm based on the codebook indication information and a way of determining the length of the TD basis vector or the length of the DD basis vector.

Alternatively, the chip also includes a memory 903 for storing necessary computer programs and data.

Those skilled in the art may also understand that the various illustrative logical blocks and steps listed in embodiments of the disclosure may be realized by electronic hardware, computer software, or their combination. Whether such a function is realized in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The embodiments of the disclosure also provide a communication system. The communication system includes a communication device as the terminal and a communication device as the network-side device in the embodiments illustrated in FIG. 7, or, the system includes a communication device as the terminal and a communication device as the network-side device in the embodiments illustrated in FIG. 8.

The disclosure also provides a readable storage medium for storing instructions. When instructions are executed by a computer, a function of any one of the above method embodiments is realized.

The disclosure also provides a computer program product. When the computer program product is performed by a computer, a function of any one of the above method embodiments is realized.

In the above embodiments, the functions may be wholly or partially realized by software, hardware, firmware, or any combination of them. When realized by software, the functions may be realized in whole or in part in the form of a computer program product. The computer program product includes one or more computer programs. Procedures or functions according to embodiments of the disclosure are wholly or partially generated when the computer program is loaded and performed in a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center in a wire way (such as a coaxial cable, a fiber optic, a digital subscriber line (DSL)) or in a wireless way (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numerical numbers like first and second in the disclosure are only for the convenience of description, and do not limit the scope of the embodiments of the disclosure, and also indicate the sequential order.

The term "at least one" in the disclosure may also be described as one or more, and the more may be two, three, four, or more, which is not limited in the disclosure. In the embodiment of the disclosure, for a type of technical features, technical features in the type of technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the disclosure may be configured or predefined. Values of information in the tables are only examples, and may be configured as other values, which are not limited in the disclosure. When the corresponding relationship between information and parameters is configured, there no need to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters illustrated in headers of the tables may be other names understandable by the communication apparatus, and values or representations of the parameters may be other values or representations understandable by the communication apparatus. When the above tables are implemented, other data structures may be employed, for example, arrays, queues, containers, stacks, linear lists, pointers, linked lists, trees, graphs, structures, classes, heaps or hash tables may be employed.

Predefined in the disclosure may be understood as defined, predefined, stored, prestored, pre-negotiated, pre-configured, solidified or pre-fired.

Those skilled in the related art may realize that, in combination with units and algorithm steps of the examples described in the embodiments of the disclosure, may be implemented by an electronic hardware or a combination of an electronic hardware and a computer software. Whether the functions are performed by the hardware or the software depends on a specific application and a design constraint of the technical solutions. Those skilled in the art may adopt different ways for each specific application to realize the described functions, but such realization should not be considered as going beyond the scope of the disclosure.

Those skilled in the art may clearly understand that, for convenience and conciseness of description, a detailed working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Therefore, the protection scope of the disclosure shall be subject to the protection scope of claims.

**Claims**

1. A method for feeding back channel state information (CSI), performed by a terminal, comprising:

    determining codebook indication information corresponding to a data transmission layer based on a length of a time domain (TD) basis vector or a length of a Doppler domain (DD) basis vector, and a codebook parameter configured by a network-side device; and
    sending CSI comprising the codebook indication information to the network-side device, wherein the codebook indication information indicates the network-side device to determine precoding matrixes corresponding to different time instances.

2. The method of claim 1, wherein determining the codebook indication information corresponding to the data transmission layer based on the length of the TD basis vector or the length of the DD basis vector, and the codebook parameter configured by the network-side device, comprises:

    determining the length of the TD basis vector or the length of the DD basis vector; and

determining the codebook indication information corresponding to the data transmission layer based on the length and the codebook parameter configured by the network-side device.

3. The method of claim 2, wherein determining the length of the TD basis vector or the length of the DD basis vector comprises:
determining the length of the TD basis vector or the length of the DD basis vector based on a first parameter configured by the network-side device.

4. The method of claim 3, wherein the first parameter is a number of channel state information reference signal (CSI-RS) resources or a number of CSI-RS resources within a CSI-RS measurement window, and determining the length of the TD basis vector or the length of the DD basis vector based on the first parameter configured by the network-side device comprises:

determining that the length of the TD basis vector or the length of the DD basis vector is equal to the number of CSI-RS resources or the number of CSI-RS resources within the CSI-RS measurement window configured by the network-side device;
or, determining that the length of the TD basis vector or the length of the DD basis vector is equal to $Q_1$ times of the number of CSI-RS resources configured by the network-side device;
or, determining that the length of the TD basis vector or the length of the DD basis vector is equal to $Q_1$ times of the number of CSI-RS resources within the CSI-RS measurement window configured by the network-side device;
or, determining that the length of the TD basis vector or the length of the DD basis vector is equal to $\dfrac{N_{CSI-RS}}{C_u} Q_1$ where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

5. The method of claim 3, wherein the first parameter is a size of a channel state information reference signal (CSI-RS) measurement window and an interval between time instances of adjacent CSI measurements, and determining the length of the TD basis vector or the length of the DD basis vector based on the first parameter configured by the network-side device comprises:

determining that the length of the TD basis vector or the length of the DD basis vector is equal to $\dfrac{(W_{meas}-1)}{d} + 1$, where $W_{meas}$ represents the size of the CSI-RS measurement window, and d represents the interval between the time instances of the adjacent CSI measurements, a maximum interval or a minimum interval between adjacent CSI measurements, or an average of intervals of a plurality of adjacent CSI measurements.

6. The method of claim 3, wherein the first parameter is a number of CSI measurements or a number of CSI measurements within a channel state information reference signal (CSI-RS) measurement window, and determining the length of the TD basis vector or the length of the DD basis vector based on the first parameter configured by the network-side device comprises:

determining that the length of the TD basis vector or the length of the DD basis vector is equal to the number of CSI measurements or the number of CSI measurements within the CSI-RS measurement window configured by the network-side device;
or, determining that the length of the TD basis vector or the length of the DD basis vector is equal to $Q_2$ times of the number of CSI measurements configured by the network-side device;
or, determining that the length of the TD basis vector or the length of the DD basis vector is equal to $Q_2$ times of the number of CSI measurements within the CSI-RS measurement window configured by the network-side device;
or, determining that the length of the TD basis vector or the length of the DD basis vector is equal to $\dfrac{B}{C_u} Q_2$, $Q_2$ is a positive integer, B represents the number of CSI measurements or the number of CSI measurements within the CSI-RS measurement window configured by the network-side device, and $C_u$ represents a compression unit in a TD.

7. The method of claim 3, wherein the first parameter is a parameter W, and determining the length of the TD basis vector or the length of the DD basis vector based on the first parameter configured by the network-side device comprises:

determining that the length of the TD basis vector or the length of the DD basis vector is equal to $\dfrac{W}{C_u}$, where W mod $C_u = 0$, and $C_u$ represents a compression unit in a TD;
or, determining that the length of the TD basis vector or the length of the DD basis vector is equal to $\left\lceil \dfrac{W}{C_u} \right\rceil$ or $\left\lfloor \dfrac{W}{C_u} \right\rfloor$, where $W \bmod C_u \neq 0$, $\lceil \ \rceil$ represents ceiling, and $\lfloor \ \rfloor$ represents flooring, wherein the parameter W is determined by at least one of following parameters 1) to 4):

1) a time slot corresponding to a CSI reporting time instance;
2) a time slot where a CSI reference resource is located;
3) a time slot corresponding to a left boundary or a right boundary of a channel state information reference signal (CSI-RS) measurement window; or
4) a time slot corresponding to a left boundary or a right boundary of a CSI reporting window.

8.  The method of any one of claims 4 to 7, further comprising:
    determining the compression unit $C_u$ in the TD.

9.  The method of claim 8, wherein

    the compression unit $C_u$ is $\alpha T_c$, where $\alpha$ is an integer less than or equal to 1, and $T_c$ represents a channel coherence time;
    or, the compression unit $C_u$ is a measurement period of the CSI-RS resource;
    or, the compression unit $C_u$ is $\beta d_1$, where $\beta$ is an integer greater than or equal to 1, and $d_1$ represents the interval between the adjacent CSI measurements;
    or, the compression unit $C_u$ is $\beta d_2$, where $\beta$ is an integer greater than or equal to 1, and $d_2$ represents the maximum interval or the minimum interval between the adjacent CSI measurements, or the average of the intervals of the plurality of adjacent CSI measurements.

10. The method of claim 2, wherein determining the length of the TD basis vector or the length of the DD basis vector comprises:
    determining the length of the TD basis vector or the length of the DD basis vector based on Doppler offset information and a Doppler extension estimated by the terminal based on a channel state information reference signal (CSI-RS).

11. The method of claim 2, wherein determining the length of the TD basis vector or the length of the DD basis vector comprises:
    receiving the length of the TD basis vector or the length of the DD basis vector configured by the network-side device.

12. The method of any one of claims 1 to 11, wherein the codebook indication information at least comprises one or more combinations of: a matrix combined by at least one spatial domain (SD) basis vector, a combination coefficient matrix, a matrix combined by at least one frequency domain (FD) basis vector, or a matrix combined by at least one time domain (TD) basis vector or at least one Doppler domain (DD) basis vector.

13. A method for feeding back channel state information (CSI), performed by a network-side device, comprising:

    determining a length of a time domain (TD) basis vector or a length of a Doppler domain (DD) basis vector;
    configuring a codebook parameter for a terminal;
    sending the length of the TD basis vector or the length of the DD basis vector and the codebook parameter to the terminal;
    receiving codebook indication information corresponding to a data transmission layer determined by the length and the codebook parameter of the terminal; and
    determining precoding matrixes corresponding to different time instances based on the codebook indication information.

14. The method of claim 13, wherein determining the length of the TD basis vector or the length of the DD basis vector comprises:
    determining the length of the TD basis vector or the length of the DD basis vector based on a first parameter configured by the network-side device.

15. The method of claim 14, wherein the first parameter is a number of channel state information reference signal (CSI-RS) resources or a number of CSI-RS resources within a CSI-RS measurement window, and determining the length of the TD basis vector or the length of the DD basis vector based on the first parameter configured by the network-side device comprises:

    determining that the length of the TD basis vector or the length of the DD basis vector is equal to the number of CSI-RS resources or the number of CSI-RS resources within the CSI-RS measurement window configured by the network-side device;
    or, determining that the length of the TD basis vector or the length of the DD basis vector is equal to $Q_1$ times of the number of CSI-RS resources configured by the network-side device;
    or, determining that the length of the TD basis vector or the length of the DD basis vector is equal to $Q_1$ times of the number of CSI-RS resources within the CSI-RS measurement window configured by the network-side device; or, determining that the length of the TD basis vector or the length of the DD basis vector is equal to $\dfrac{N_{CSI-RS}}{C_u}Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

16. The method of claim 14, wherein the first parameter is a size of a channel state information reference signal (CSI-RS) measurement window and an interval between time instances of adjacent CSI measurements, and determining the length of the TD basis vector or the length of the DD basis vector based on the first parameter configured by the network-side device comprises:
determining that the length of the TD basis vector or the length of the DD basis vector is equal to $\dfrac{(W_{meas}-1)}{d}+1$, where $W_{meas}$ represents the size of the CSI-RS measurement window, and d represents the interval between the time instances of the adjacent CSI measurements, a maximum interval or a minimum interval between adjacent CSI measurements, or an average of intervals of a plurality of adjacent CSI measurements.

17. The method of claim 14, wherein the first parameter is a number of CSI measurements or a number of CSI measurements within a channel state information reference signal (CSI-RS) measurement window, and determining the length of the TD basis vector or the length of the DD basis vector based on the first parameter configured by the network-side device comprises:

determining that the length of the TD basis vector or the length of the DD basis vector is equal to the number of CSI measurements or the number of CSI measurements within the CSI-RS measurement window configured by the network-side device;
or, determining that the length of the TD basis vector or the length of the DD basis vector is equal to $Q_2$ times of the number of CSI measurements configured by the network-side device;
or, determining that the length of the TD basis vector or the length of the DD basis vector is equal to $Q_2$ times of the number of CSI measurements within the CSI-RS measurement window configured by the network-side device;
or, determining that the length of the TD basis vector or the length of the DD basis vector is equal to $\dfrac{B}{C_u}Q_2$, where $Q_2$ is a positive integer, B represents the number of CSI measurements or the number of CSI measurements within the CSI-RS measurement window configured by the network-side device, and $C_u$ represents a compression unit in a TD.

18. The method of claim 14, wherein the first parameter is a parameter W, and determining the length of the TD basis vector or the length of the DD basis vector based on the first parameter configured by the network-side device comprises:

determining that the length of the TD basis vector or the length of the DD basis vector is equal to $\dfrac{W}{C_u}$, where W mod $C_u = 0$, and $C_u$ represents a compression unit in a TD; or
determining that the length of the TD basis vector or the length of the DD basis vector is equal to $\left\lceil \dfrac{W}{C_u} \right\rceil$ or $\left\lfloor \dfrac{W}{C_u} \right\rfloor$, where $W$ mod $C_u \neq 0$, $\lceil\,\rceil$ represents ceiling, and $\lfloor\,\rfloor$ represents flooring, wherein the parameter W is determined by at least one of following parameters 1) to 4):

1) a time slot corresponding to a CSI reporting time instance;
2) a time slot where a CSI reference resource is located;
3) a time slot corresponding to a left boundary or a right boundary of a channel state information reference signal (CSI-RS) measurement window; or
4) a time slot corresponding to a left boundary or a right boundary of a CSI reporting window.

19. The method of any one of claims 15 to 18, further comprising:
determining the compression unit $C_u$ in the TD.

20. The method of claim 19, wherein

the compression unit $C_u$ is $\alpha T_c$, where $\alpha$ is an integer less than or equal to 1, and $T_c$ represents a channel coherence time;
the compression unit $C_u$ is a measurement period of the CSI-RS resource;
the compression unit $C_u$ is $\beta d_1$, where $\beta$ is an integer greater than or equal to 1, and $d_1$ represents the interval between the adjacent CSI measurements; or

the compression unit $C_u$ is $\beta d_2$, where $\beta$ is an integer greater than or equal to 1, and $d_2$ represents the maximum interval or the minimum interval between the adjacent CSI measurements, or the average of the intervals of the plurality of adjacent CSI measurements.

21. The method of claim 13, wherein determining the length of the TD basis vector or the length of the DD basis vector comprises:

determining the length of the TD basis vector or the length of the DD basis vector based on Doppler offset information and a Doppler extension reported by the terminal.

22. The method of any one of claims 13 to 21, wherein determining precoding matrixes corresponding to different time instances based on the codebook indication information comprises:

determining precoding matrixes corresponding to different time instances by employing a codebook structure or a precoding matrix indicator (PMI) prediction algorithm based on the codebook indication information and a way of determining the length of the TD basis vector or the length of the DD basis vector.

23. A communication device, comprising:

a processing module, configured to determine codebook indication information corresponding to a data transmission layer based on a length of a time domain (TD) basis vector or a length of a Doppler domain (DD) basis vector, and a codebook parameter configured by a network-side device; and
a receiving and sending module, configured to send channel state information (CSI) comprising the codebook indication information to the network-side device, wherein the codebook indication information indicates the network-side device to determine precoding matrixes corresponding to different time instances.

24. The communication device of claim 23, wherein the processing module is specifically configured to:

determine the length of the TD basis vector or the length of the DD basis vector; and
determine the codebook indication information corresponding to the data transmission layer based on the length and the codebook parameter configured by the network-side device.

25. The communication device of claim 24, wherein the processing module is specifically configured to:
determine the length of the TD basis vector or the length of the DD basis vector based on a first parameter configured by the network-side device.

26. The communication device of claim 25, wherein the first parameter is a number of channel state information reference signal (CSI-RS) resources or a number of CSI-RS resources within a CSI-RS measurement window, and the processing module is specifically configured to:

determine that the length of the TD basis vector or the length of the DD basis vector is equal to the number of CSI-RS resources or the number of CSI-RS resources within the CSI-RS measurement window configured by the network-side device;
or, determine that the length of the TD basis vector or the length of the DD basis vector is equal to $Q_1$ times of the number of CSI-RS resources configured by the network-side device;
or, determine that the length of the TD basis vector or the length of the DD basis vector is equal to $Q_1$ times of the number of CSI-RS resources within the CSI-RS measurement window configured by the network-side device;
or, determine that the length of the TD basis vector or the length of the DD basis vector is equal to $\dfrac{N_{CSI-RS}}{C_u} Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

27. The communication device of claim 25, wherein the first parameter is a size of a channel state information reference signal (CSI-RS) measurement window and an interval between time instances of adjacent CSI measurements, and the processing module is specifically configured to:
determine that the length of the TD basis vector or the length of the DD basis vector is equal to $\dfrac{(W_{meas}-1)}{d} + 1$, where $W_{meas}$ represents the size of the CSI-RS measurement window, and d represents the interval between the time instances of the adjacent CSI measurements, a maximum interval or a minimum interval between adjacent CSI measurements, or an average of intervals of a plurality of adjacent CSI measurements.

28. The communication device of claim 25, wherein the first parameter is a number of CSI measurements or a number of CSI measurements within a channel state information reference signal (CSI-RS) measurement window, and the processing module is specifically configured to:

determine that the length of the TD basis vector or the length of the DD basis vector is equal to the number of CSI measurements or the number of CSI measurements within the CSI-RS measurement window configured by the network-side device;

or, determine that the length of the TD basis vector or the length of the DD basis vector is equal to $Q_2$ times of the number of CSI measurements configured by the network-side device;

or, determine that the length of the TD basis vector or the length of the DD basis vector is equal to $Q_2$ times of the number of CSI measurements within the CSI-RS measurement window configured by the network-side device;

or, determine that the length of the TD basis vector or the length of the DD basis vector is equal to $\dfrac{B}{C_u}Q_2$, where $Q_2$ is a positive integer, B represents the number of CSI measurements or the number of CSI measurements within the CSI-RS measurement window configured by the network-side device, and $C_u$ represents a compression unit in a TD.

29. The communication device of claim 25, wherein the first parameter is a parameter W, and the processing module is specifically configured to:

determine that the length of the TD basis vector or the length of the DD basis vector is equal to $\dfrac{W}{C_u}$, where W mod $C_u$ = 0, and $C_u$ represents a compression unit in a TD; or

determine that the length of the TD basis vector or the length of the DD basis vector is equal to $\left\lceil \dfrac{W}{C_u} \right\rceil$ or $\left\lfloor \dfrac{W}{C_u} \right\rfloor$, where $W$ mod $C_u \neq 0$, $\lceil\ \rceil$ represents ceiling, and $\lfloor\ \rfloor$ represents flooring, wherein the parameter W is determined by at least one of following parameters 1) to 4):

1) a time slot corresponding to a CSI reporting time instance;
2) a time slot where a CSI reference resource is located;
3) a time slot corresponding to a left boundary or a right boundary of a channel state information reference signal (CSI-RS) measurement window; or
4) a time slot corresponding to a left boundary or a right boundary of a CSI reporting window.

30. The communication device of any one of claims 26 to 29, wherein the processing module is further configured to:
determine the compression unit $C_u$ in the TD.

31. The communication device of claim 30, wherein

the compression unit $C_u$ is $\alpha T_c$, where $\alpha$ is an integer less than or equal to 1, and $T_c$ represents a channel coherence time;

or, the compression unit $C_u$ is a measurement period of the CSI-RS resource;

or, the compression unit $C_u$ is $\beta d_1$, where $\beta$ is an integer greater than or equal to 1, and $d_1$ represents the interval between the adjacent CSI measurements;

or, the compression unit $C_u$ is $\beta d_2$, where $\beta$ is an integer greater than or equal to 1, and $d_2$ represents the maximum interval or the minimum interval between the adjacent CSI measurements, or the average of the intervals of the plurality of adjacent CSI measurements.

32. The communication device of claim 24, wherein the processing module is specifically configured to:
determine the length of the TD basis vector or the length of the DD basis vector based on Doppler offset information and a Doppler extension estimated by the terminal based on a channel state information reference signal (CSI-RS).

33. The communication device of claim 23, wherein the receiving and sending module is further configured to:
receive the length of the TD basis vector or the length of the DD basis vector configured by the network-side device.

34. The communication device of any one of claims 23 to 33, wherein the codebook indication information at least comprises one or more combinations of: a matrix combined by at least one spatial domain (SD) basis vector, a combination coefficient matrix, a matrix combined by at least one frequency domain (FD) basis vector, or a matrix combined by at least one TD basis vector or at least one DD basis vector.

35. A communication device, comprising:

a processing module, configured to determine a length of a time domain (TD) basis vector or a length of a Doppler domain (DD) basis vector, the processing module being further configured to configure a codebook parameter for a terminal; and

a receiving and sending module, configured to send the length of the TD basis vector or the length of the DD basis vector and the codebook parameter to the terminal,

the receiving and sending module being further configured to receive codebook indication information corresponding to a data transmission layer determined by the terminal based on the length and the codebook parameter;

the processing module being further configured to determine precoding matrixes corresponding to different time instances based on the codebook indication information.

**36.** The communication device of claim 35, wherein the processing module is specifically configured to: determine the length of the TD basis vector or the length of the DD basis vector based on a first parameter configured by the network-side device.

**37.** The communication device of claim 35, wherein the first parameter is a number of channel state information reference signal (CSI-RS) resources or a number of CSI-RS resources within a CSI-RS measurement window, and the processing module is specifically configured to:

determine that the length of the TD basis vector or the length of the DD basis vector is equal to the number of CSI-RS resources or the number of CSI-RS resources within the CSI-RS measurement window configured by the network-side device;

or, determine that the length of the TD basis vector or the length of the DD basis vector is equal to $Q_1$ times of the number of CSI-RS resources configured by the network-side device;

or, determine that the length of the TD basis vector or the length of the DD basis vector is equal to $Q_1$ times of the number of CSI-RS resources within the CSI-RS measurement window configured by the network-side device;

or, determine that the length of the TD basis vector or the length of the DD basis vector is equal to $\dfrac{N_{CSI-RS}}{C_u} Q_1$, where $Q_1$ is a positive integer, $N_{CSI-RS}$ represents the number of CSI-RS resources or the number of CSI-RS resources within the CSI-RS measurement window configured by the network-side device, and $C_u$ represents a compression unit in a TD.

**38.** The communication device of claim 36, wherein the first parameter is a size of a channel state information reference signal (CSI-RS) measurement window and an interval between time instances of adjacent CSI measurements, and the processing module is specifically configured to:
determine that the length of the TD basis vector or the length of the DD basis vector is equal to $\dfrac{(W_{meas}-1)}{d} + 1$, where $W_{meas}$ represents the size of the CSI-RS measurement window, and d represents the interval between the time instances of the adjacent CSI measurements, a maximum interval or a minimum interval between adjacent CSI measurements, or an average of intervals of a plurality of adjacent CSI measurements.

**39.** The communication device of claim 36, wherein the first parameter is a number of CSI measurements or a number of CSI measurements within a channel state information reference signal (CSI-RS) measurement window, and the processing module is specifically configured to:

determine that the length of the TD basis vector or the length of the DD basis vector is equal to the number of CSI measurements or the number of CSI measurements within the CSI-RS measurement window configured by the network-side device;

or, determine that the length of the TD basis vector or the length of the DD basis vector is equal to $Q_2$ times of the number of CSI measurements configured by the network-side device;

or, determine that the length of the TD basis vector or the length of the DD basis vector is equal to $Q_2$ times of the number of CSI measurements within the CSI-RS measurement window configured by the network-side device;

or, determine that the length of the TD basis vector or the length of the DD basis vector is equal to $\dfrac{B}{C_u} Q_2$, where $Q_2$ is a positive integer, B represents the number of CSI measurements or the number of CSI measurements within the CSI-RS measurement window configured by the network-side device, and $C_u$ represents a compression unit in a TD.

**40.** The communication device of claim 36, wherein the first parameter is a parameter W, and the processing module is specifically configured to:

determine that the length of the TD basis vector or the length of the DD basis vector is equal to $\dfrac{W}{C_u}$, where W mod $C_u = 0$, and $C_u$ represents a compression unit in a TD; or
determine that the length of the TD basis vector or the length of the DD basis vector is equal to

$\left\lceil \frac{W}{C_u} \right\rceil$ or $\left\lfloor \frac{W}{C_u} \right\rfloor$, where W mod $C_u \neq 0$, $\lceil \rceil$ represents ceiling, and $\lfloor \rfloor$ represents flooring, wherein the parameter W is determined by at least one of following parameters 1) to 4):

> 1) a time slot corresponding to a CSI reporting time instance;
> 2) a time slot where a CSI reference resource is located;
> 3) a time slot corresponding to a left boundary or a right boundary of a channel state information reference signal (CSI-RS) measurement window; or
> 4) a time slot corresponding to a left boundary or a right boundary of a CSI reporting window.

**41.** The communication device of any one of claims 37 to 40, wherein the processing module is further configured to: determine the compression unit $C_u$ in the TD.

**42.** The communication device of claim 41, wherein

> the compression unit $C_u$ is $\alpha T_c$, where $\alpha$ is an integer less than or equal to 1, and $T_c$ represents a channel coherence time;
> the compression unit $C_u$ is a measurement period of the CSI-RS resource;
> the compression unit $C_u$ is $\beta d_1$, where $\beta$ is an integer greater than or equal to 1, and $d_1$ represents the interval between the adjacent CSI measurements; or
> the compression unit $C_u$ is $\beta d_2$, where $\beta$ is an integer greater than or equal to 1, and $d_2$ represents the maximum interval or the minimum interval between the adjacent CSI measurements, or the average of the intervals of the plurality of adjacent CSI measurements.

**43.** The communication device of claim 35, wherein the processing module is specifically configured to: determine the length of the TD basis vector or the length of the DD basis vector based on Doppler offset information and a Doppler extension reported by the terminal.

**44.** The communication device of any one of claims 35 to 43, wherein the processing module is specifically configured to: determine precoding matrixes corresponding to different time instances by employing adopting a codebook structure or a precoding matrix indicator (PMI) prediction algorithm based on the codebook indication information and a way of determining the length of the TD basis vector or the length of the DD basis vector.

**45.** A communication device, comprising a processor and a memory for storing a computer program, wherein when the computer program stored in the memory is executed by the processor, the device is caused to perform the method of any one of claims 1 to 12.

**46.** A communication device, comprising a processor and a memory for storing a computer program, wherein when the computer program stored in the memory is executed by the processor, the device is caused to perform the method of any one of claims 13 to 22.

**47.** A computer readable storage medium for storing instructions, wherein when instructions are executed, the method of any one of claims 1 to 12 is realized.

**48.** A computer readable storage medium for storing instructions, wherein when instructions are executed, the method of any one of claims 13 to 22 is realized.

FIG. 1

| | |
|---|---|
| determining codebook indication information corresponding to a data transmission layer based on a length of a time domain (TD) basis vector or a length of a Doppler domain (DD) basis vector, and a codebook parameter configured by a network-side device | 201 |
| sending CSI including the codebook indication information to the network-side device, in which the codebook indication information indicates the network-side device to determine precoding matrixes corresponding to different time instances | 202 |

FIG. 2

| | |
|---|---|
| determining the length of the TD basis vector or the length of the DD basis vector based on a first parameter configured by a network-side device | 301 |

↓

| | |
|---|---|
| determining the codebook indication information corresponding to the data transmission layer based on a codebook parameter and a length configured by a network-side device. | 302 |

↓

| | |
|---|---|
| sending CSI including the codebook indication information to the network-side device, in which the codebook indication information indicates the network-side device to determine precoding matrixes corresponding to different time instances | 303 |

FIG. 3

| | |
|---|---|
| determining the length of the TD basis vector or the length of the DD basis vector | 401 |

↓

| | |
|---|---|
| configuring a codebook parameter for a terminal | 402 |

↓

| | |
|---|---|
| sending the length of the TD basis vector or the length of the DD basis vector and the codebook parameter to the terminal | 403 |

↓

| | |
|---|---|
| receiving codebook indication information corresponding to a data transmission layer determined by the length and the codebook parameter of the terminal | 404 |

↓

| | |
|---|---|
| determining the length of the TD basis vector or the length of the DD basis vector | 405 |

FIG. 4

determining the length of the TD basis vector or the length of the DD basis vector based on a first parameter configured by the network-side device    501

configuring a codebook parameter for a terminal    502

sending the length of the TD basis vector or the length of the DD basis vector and the codebook parameter to the terminal    503

receiving codebook indication information corresponding to a data transmission layer determined by the length and the codebook parameter of the terminal    504

determining precoding matrixes corresponding to different time instances based on the codebook indication information    505

FIG. 5

CSI-RS measurement window          CSI reporting window

$t_0$  $t_0+3$ $t_0+n$                          $t_0+l$

d

T1

T2

t

FIG. 6

communication device

receiving and sending module — 701

processing module — 702

— 70

FIG. 7

communication device

interface circuit — 807

antenna — 806

transceiver — 805

processor — 801

memory — 802

computer program — 804

— 80

FIG. 8

chip

processor — 901

interface — 902

memory — 903

— 90

FIG. 9

| INTERNATIONAL SEARCH REPORT | International application No. |
|---|---|
| | **PCT/CN2022/103165** |

**A. CLASSIFICATION OF SUBJECT MATTER**

H04L 27/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, 3GPP: 长, 大小, 多普勒域, 基向量, 码本, 时域, 预编码矩阵, codebook, csi, dd, length, precoding, size, td, vector, time domain, doppler domain, basis, matrix

**C. DOCUMENTS CONSIDERED TO BE RELEVANT**

| Category* | Citation of document, with indication, where appropriate, of the relevant passages | Relevant to claim No. |
|---|---|---|
| A | CN 113840324 A (HUAWEI TECHNOLOGIES CO., LTD.) 24 December 2021 (2021-12-24) description, paragraphs [0135]-[0173] | 1-48 |
| A | US 2022094412 A1 (HUAWEI TECHNOLOGIES CO., LTD.) 24 March 2022 (2022-03-24) entire document | 1-48 |
| A | EP 3855635 A1 (FRAUNHOFER GES FORSCHUNG) 28 July 2021 (2021-07-28) entire document | 1-48 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2023** | **24 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/103165**

| Patent document cited in search report | | | Publication date (day/month/year) | Patent family member(s) | Publication date (day/month/year) |
|---|---|---|---|---|---|
| CN | 113840324 | A | 24 December 2021 | None | |
| US | 2022094412 | A1 | 24 March 2022 | None | |
| EP | 3855635 | A1 | 28 July 2021 | None | |

Form PCT/ISA/210 (patent family annex) (July 2022)